# EUROPEAN PATENT APPLICATION

(11) **EP 2 506 169 A2**
(43) Date of publication of application: **03.10.2012**
(21) Application number: 12173694.6
(22) Date of filing: 30.10.2002
(51) Int. Cl.: G06F 17/30

(54) **Information analyzing method and apparatus**

(30) Priority: 26.11.2001 JP 2001359484
(62) Divisional of application: 02775417.5
(71) Applicant: FUJITSU LIMITED, Kawasaki-shi, Kanagawa 211-8588 (JP)
(72) Inventor: Uchino, Kanji, Kawasaki-shi, Kanagawa 211-8588 (JP); Kume, Yuki, Kawasaki-shi, Kanagawa 211-8588 (JP)
(74) Representative: Hutchison, James

(57) **Abstract**

This invention is to automatically extract noteworthy information from a large amount of information. First, a disclosure unit of an individual opinion such as a statement in a personal web page or a bulletin board is extracted from collected contents information, and information (URL and/or statement number) to specify the disclosure unit of the individual opinion is registered. Next, an object (company name and/or industry type) of the individual opinion is specified. Then, the disclosed contents of the individual opinion are analyzed, so that an evaluation as to the object (good evaluation / bad evaluation) is specified. Besides, the reliability is determined based on referenced degree ranking and based on whether information to indicate the basis of the opinion and/or the identity of the speaker is included. Thus, the evaluation as to the object as characteristics of the individual opinion can be presented to requesters. Besides, for example, only a bad evaluation can be extracted from evaluations as to the object of the individual opinion. Furthermore, the opinion, which has a high influence degree and is noteworthy, can also be found based on the referenced degree ranking and/or the reliability.

## Description

### [Technical Field]

The present invention relates to a technique for automatically extracting specific information from a large amount of information.

### [Background Technology]

To automatically extract libels and slanders against a company from information disclosed in the Internet has been conducted by using some document searching tools hitherto. However, a method is adopted in which keywords are specified and then a patrol of web pages is carried out to extract them, or URLs (Uniform Resource Locators) of search objects are specified in advance to extract them. That is, such a judgment that the collected information is information of a good evaluation or information of a bad evaluation is not made.

Furthermore, information as to the influence of the collected information cannot also be obtained. Thus, it is not suitable for finding "circulation of rumor" for stock price manipulation.

In addition, United States Patent No. 6, 438, 632 discloses an electronic bulletin board system having a function of automatically checking the contents of a message transmitted from a user computer and desired to be presented on the electronic bulletin board. That is, with respect to the messages transmitted from the user computer and desired to be presented on the electronic bulletin board, a check is made according to a glossary of presentation-inhibited words, which includes words previously selected as being unsuitable for presentation on the electronic bulletin board. In a case where any word in the glossary of presentation-inhibited words is not included in the message desired to be presented, the message is presented on the electronic bulletin board. On the other hand, in a case where any word in the glossary of presentation-inhibited words is included, the user computer is notified that the message cannot be presented. Besides, at this time, the event of rejecting the presentation of the message is notified to an operation administrator computer. In such a technique, although it is possible to judge the permission or inhibition of the presentation on the bulletin board, the contents of the message judged to be capable of being presented cannot be automatically analyzed.

### [Summary of the Invention]

Thus, although definitely specified information can be extracted from an enormous amount of information according to the conventional technique, noticeable information cannot be automatically extracted, and the interpretation and analysis of the extracted information must be manually carried out. With this technique, the user cannot obtain the characteristics of the extracted information, the source of the information, and the like without a further operation.

Therefore, an object of the present invention is to provide a novel technique for automatically extracting noticeable information from a large amount of information.

Besides, another object of the present invention is to provide a technique for extracting specific information from a large amount of information and for enabling the characteristics of the extracted information to be presented.

Still another object of the present invention is to provide a technique for extracting specific information from a large amount of information and for enabling the reliability and/or influence of the extracted information to be presented.

Sill another object of the present invention is to provide a technique for extracting specific information from a large amount of information and for searching the source of the extracted information.

A contents information analyzing method according to the present invention comprises an extraction step of extracting a disclosure unit (e.g. a personal web page, a site managed by an individual or small-scale organization, a statement on a bulletin board, or the like) of an individual opinion from collected contents information, and storing information (e.g. a URL, a statement number, or the like) to specify the disclosure unit of the individual opinion into a storage device; an object specification step of specifying an object (e.g. a company name, an industry type, a commodity name, or the like) of the individual opinion, and storing it into the storage device; and an evaluation specification step of specifying an evaluation (e.g. a good evaluation or a bad evaluation) as to the object by the individual by analyzing disclosed contents of the individual opinion, and storing it into the storage device. By this configuration, the evaluation for the object, as the characteristics of the extracted opinion of the individual, can be presented. For example, only bad evaluations can be extracted from the evaluations for the object of the opinions of the individuals.

Besides, it is possible to configure the aforementioned extraction step to include a specification step of specifying a unit (e.g. one web page) of the contents information including the individual opinion; and a step of extracting the disclosure unit of the individual opinion from the specified unit of the contents information. For example, after a web site of a bulletin board or a personal homepage is extracted, a statement or the like as the disclosure unit of the opinion of the individual is separated.

Furthermore, the aforementioned specification step may be carried out in descending order of a referenced degree for each unit of the contents information. That the referenced degree is high indicates that the contents information has a high possibility that many people see it and has a high influence, and accordingly, the contents information having the high influence is processed with high priority. Besides, there is also a case where the influence itself is treated as an index to indicate whether the information is noteworthy.

Besides, it is possible to configure the aforementioned extraction step to comprise a step of detecting a group (e.g. a thread in an embodiment) of the disclosure units of the individual opinions by tracing a reference source of the individual opinion, and storing information to specify the group into the storage device. This is because what is to be noticed exists not only as a personal statement but also as the unity of statements.

Furthermore, it is possible to configure the aforementioned extraction step to comprise a category specification step of specifying a category (e.g. an industry type) as to the object of the individual opinion, and storing it into the storage device. Thus, the category as the characteristics of the extracted opinion of the individual can be presented. For example, there is also a case where noticeable information, and/or an expression and/or nuance of the evaluation are different between respective industry types, and the classification for each industry type, or the like is also effective.

Besides, the present invention may further comprise a step of judging whether information, which can be a basis of the individual opinion (e.g. a referencing statement, web site, contents of a newspaper and/or magazine, or the like) is included in the disclosure unit of the individual opinion, and storing the information, which can be the basis, into the storage device, if it is included. By this configuration, the source of the information as the characteristics of the extracted opinion of the individual can be presented. This is very useful when it is necessary to investigate the source of the information.

Furthermore, the present invention may further comprise a reliability determining step of determining reliability of the disclosure unit of the individual opinion, and storing it into the storage device. By this configuration, the reliability as the characteristics of the extracted opinion of the individual can be presented. It also becomes possible to obtain a standard as to whether the information is reliable or not reliable. There is also a case where what has high reliability is extracted as noticeable information.

Incidentally, the aforementioned reliability determining step may comprise a step of judging whether information indicating an identity of the individual (e.g. a mail address, a handle name, or the like) is included in the disclosure unit of the individual opinion. This is because information, which can be opened to the public in spite of disclosure of the identity, can be judged to be reliable.

Furthermore, the aforementioned reliability determining step may comprise a step of judging whether information, which can be a basis of the individual opinion, is included in the disclosure unit of the individual opinion. This is because if the basis is clear, the information can be judged to be reliable.

Besides, a first aspect of the invention may further comprise the steps of: analyzing a plurality of search logs for the contents information, wherein each of the search logs includes a search keyword and a jump destination URL, and specifying a site including a personal homepage in the lower layers based on the number of accesses and the number of kinds of search keywords; and extracting the personal homepage included in the lower layers of the specified site as the disclosure unit of the individual opinion.

Furthermore, the first aspect of the invention may further comprise a step of analyzing a plurality of search logs for the content information, wherein each of the search logs includes a search keyword and a jump destination URL, and extracting a site managed by an individual or small-scale organization as the disclosure unit of the individual opinion based on the number of accesses and the number of kinds of search keywords.

A contents information analyzing method according to a second aspect of the present invention comprises an extraction step of extracting a disclosure unit of an individual opinion from collected contents information, and storing information to specify the disclosure unit of the individual opinion into a storage device; an object specification step of specifying an object of the individual opinion and storing it into the storage device; and a reliability determining step of determining reliability of the disclosure unit of the individual opinion, and storing it into the storage device. By this configuration, it becomes possible to extract, for example, the opinion of the individual, which has high reliability. Incidentally, a referenced degree of the opinion of the individual or the contents information including the opinion of the individual may be regarded as an influence degree, and this may be treated as a parameter of the automatic extraction.

According to a third aspect of the invention, the contents information analyzing method comprises the steps of: obtaining a plurality of search logs for the contents information, wherein each of search logs includes a search keyword and a jump destination URL, and storing them into a memory; counting the number of accesses and the number of kinds of search keywords for each jump destination URL according to a predetermined rule, and storing counting results into the memory; totaling, for each site specified based on the structure of the URL, the number of accesses and the number of kinds of search keywords up for the jump destination URLs included in lower layers of the site, and storing totaling results into the memory; and identifying the type of the site based on the number of accesses and the number of kinds of search keywords, that are totaled for the site. With this configuration, it becomes possible to identify a site of the Internet service provider, company site, site managed by an individual or small-scale organization, or the like, for example. If the site of the Internet service provider can be detected, a personal homepage (also called individual web page) is also detected.

Besides, there is a case where an object (e.g. a company) of the opinion of the individual or a category (e.g. an industry type, commodity name or the like) of the object are determined by using a dictionary on a URL, company name, abbreviation, and industry type, and/or a dictionary including feature words on respective industry types. These dictionaries can be automatically constructed by analyzing the collected contents information and the like.

Incidentally, the aforementioned methods can be executed by a computer, and programs for those methods are stored in a storage medium or a storage device such as, for example, a flexible disk, a CD-ROM, a magneto-optical disk, a semiconductor memory, or a hard disk. Besides, there is also a case where the program is distributed as a digital signal through a network or the like. Incidentally, intermediate processing results are temporarily stored in a storage device such as a memory.

### [Brief description of the drawings]

FIG. 1 is a diagram to explain a system outline according to an embodiment of the present invention;
FIG. 2 is a diagram showing an example of a processing flow by an information collection and analysis system;
FIGs . 3A and 3B are diagrams showing an example of data stored in a bulletin board element storage;
FIGs. 4A, 4B and 4C are diagrams showing an example of data stored in an analyzed data storage;
FIG. 5 is a diagram showing an example of data stored in an industry type glossary storage;
FIG. 6 is a diagram showing an example of a processing flow as to a statement extraction processing;
FIG. 7 is a diagram showing an example of a processing flow as to a thread extraction processing;
FIGs. 8A and 8B are diagram showing an example of data stored in a company name dictionary storage;
FIG. 9 is a diagram showing an example of a processing flow as to a source search processing;
FIG. 10 is a diagram showing an example of a processing flow as to an analysis processing of a statement and thread;
FIG. 11 is a diagram showing an example of a processing flow to generate a rule set;
FIG. 12 is a diagram showing an example of processing results of a statistical processor;
FIG. 13 is a diagram showing an example of processing results of the statistical processor;
FIG. 14 is a diagram showing an example of functional blocks of a glossary generator;
FIG. 15 is a diagram showing an example of a processing flow by the glossary generator;
FIG. 16 is a diagram showing an example of the processing flow by a search log analyzer;
FIG. 17 is a diagram showing an example of the processing flow as to a first log normalization processing by the search log analyzer;
FIG. 18 is a diagram showing an example of the processing flow as to a second log normalization processing by the search log analyzer;
FIG. 19 is a diagram showing an example of the processing flow as to a totaling processing by the search log analyzer;
FIG. 20 is a diagram showing an example of the processing flow as to a processing to identify the site type and registration processing by the search log analyzer;
FIG. 21 is a diagram showing an example of a processing flow by the search log analyzer generator; and
FIG. 22 is a diagram showing an example of processing results of the statistical processor or the like.

### [Best mode for carrying out the invention]

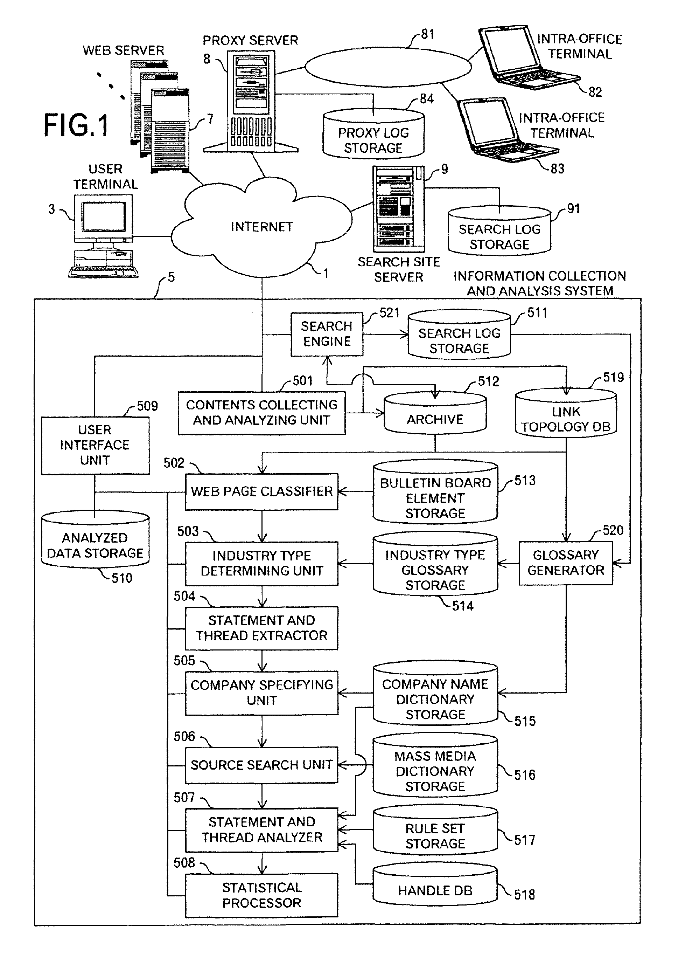

FIG. 1 shows a system outline according to an embodiment of the present invention. The Internet 1 as a computer network is connected with a large number of web servers 7, and the web servers 7 open an enormous amount of information to the public. Besides, the Internet 1 is connected with a large number of user terminals 3, each provided with a web browser, and users operate the user terminals 3 to browse the web pages opened by the web servers 7 to the public. Furthermore, the Internet 1 is connected with one or plural search site servers 9 for providing a search service to cause the user operating the user terminal 3 to effectively access an enormous volume of web pages opened on the web servers 7 to public. And, the search site server 9 has a search log storage 91 for storing search logs corresponding to search requests instructed from the user terminal 3. Besides, for example, the company or the like provides one or plural proxy servers 8 to connect with the Internet 1. The proxy server 8 is connected with intra-office terminals 82 and 83 and the like via a LAN (Local Area Network) 81 inside of the company. This proxy server 8 is the same as the normal proxy server, but it has a proxy log storage 84 for storing access relay logs to the Internet 1 by the intra-office terminals 82 and 83.

Furthermore, the Internet 1 is also connected with an information collection and analysis system 5 for executing a main processing in this embodiment. This information collection and analysis system 5 provides specific users with analysis results, archives collected information, and provides the users with a search function for the archived information. That is, by accessing the information collection and analysis system 5 through the Internet 1, the user terminals 3 can acquire analysis results explained below, and can acquire search results for the archived information. Incidentally, the search function may not be provided.

The information collection and analysis system 5 includes a contents collecting and analyzing unit 501, web page classifier 502, industry type determining unit 503, statement and thread extractor 504, company specifying unit 505, source search unit 506, statement and thread analyzer 507, statistical processor 508, user interface unit 509, glossary generator 520, and search engine 521.

The contents collecting and analyzing unit 501 stores collected contents information, and referenced degrees based on analysis results of link relations for the contents information as ranking information into an archive 512, and stores link topology information as analysis results for reference relations into a link topology DB 519. The web page classifier 502 uses the information stored in the archive 512, and refers to bulletin board element data stored in a bulletin board element storage 513 to carry out a processing, and outputs processing results to, for example, the industry type determining unit 503, and also stores them into an analyzed data storage 510. The industry type determining unit 503 uses, for example, the output of the web page classifier 502, and refers to an industry type glossary stored in an industry type glossary storage 514 to carry out a processing, and outputs processing results to, for example, the statement and thread extractor 504, and also stores them into the analyzed data storage 510.

The statement and thread extractor 504 uses, for example, the output of the industry type determining unit 503 to carry out a processing, and outputs processing results to, for example, the company specifying unit 505, and also stores them into the analyzed data storage 510. The company specifying unit 505 uses the output of the statement and thread extractor 504, and refers to a company name dictionary stored in a company name dictionary storage 515 to carry out a processing, and outputs processing results to, for example, the source search unit 506, and also stores them into the analyzed data storage 510. The source search unit 506 uses the output of the company specifying unit 505, and refers to a mass media dictionary stored in a mass media dictionary storage 516 to carry out a processing, and outputs processing results to, for example, the statement and thread analyzer 507, and also stores them into the analyzed data storage 510.

The statement and thread analyzer 507 uses the output of the source search unit 506, and refers to the company name dictionary stored in the company name dictionary storage 515, data of rules concerning genres and evaluations of personal opinions, that is stored in a rule set storage 517, and a handle DB 518 in a case where a handle is used on a bulletin board or the like, to carry out a processing, and outputs processing results to the statistical processor 508, and also stores them to the analyzed data storage 510. The statistical processor 508 uses the output from the statement and thread analyzer 507 or the information stored in the analyzed data storage 510 to carry out a statistical processing, and outputs processing results to, for example, the user interface unit 509 or the analyzed data storage 510.

The user interface unit 509 transmits data stored in the analyzed data storage 510 or the output of the statistical processor 508 to the user terminal 3 in response to an access from the user terminal 3. Besides, the search engine 521 searches data stored in the archive 512 in response to a search request from the user terminal 3, and transmits search results to the user terminal 3. The search engine 521 stores a search log into a search log storage 511. The glossary generator 520 refers to the search log storage 511, the archive 512 and the link topology DB 519 to generate the industry type glossary and to store it into the industrial type glossary storage 514, and also to generate the company name dictionary (list) and to store it into the company name dictionary (list) storage 515. Furthermore, the glossary generator 520 may obtain data stored in the proxy log storage 84 of the proxy server 8 and/or data stored in the search log storage 91 of the search site server 9, store the obtained data into the search log storage 511, and carry out a processing using the obtained data. Namely, it generates data items of the industry type glossary to store them into the industrial type glossary storage 514, and generates data items of the company name dictionary (list) to store them into the company name dictionary (list) storage 515. Besides, it may carry out a processing to specify the URLs to be analyzed, and output the processing results to the web classifier 502 and/or analyzed data storage 510 and the like.

The contents collecting and analyzing unit 501 collects data of the web pages opened by the many web servers 7 connected to the Internet 1, and by analyzing reference relations based on links, calculates ranking values from referenced degrees of the respective web pages. Then, the contents collecting and analyzing unit 501 stores the collected data of the web pages and the ranking values of the referenced degrees into the archive 512. Besides, it stores the reference relations based on the links as link topology data into the link topology DB 519. Since the processing of this contents collecting and analyzing unit 501 uses an existing technique, and is disclosed in, for example, United States Patent Application Publication No. 2001-0020238-A1 and/or Japanese Laid Open Patent Application No. 2000-10996, the details are not further explained.

The web page classifier 502 performs a processing for automatically discriminating personal homepages and web pages of bulletin boards from web pages stored in the archive 512. The personal homepages and the web pages of the bulletin boards are contents information in which personal opinions are disclosed. There are not necessarily many readers, however, they cannot be passed by in view of "circulation of rumor", and their information as to the existence and the source should be stored. In this processing, the web page classifier 502 refers to the bulletin board element storage 513, which stores bulletin board element data as the URLs and as keywords, which are parts of the URLs, to discriminate the personal home pages and the web pages of the bulletin boards. Besides, the web page classifier 502 performs a processing for detecting the use of a specific CGI (Common Gateway Interface), and/or for detecting a pattern peculiar to the bulletin board in HTML (Hyper Text Markup Language) source codes of the web page.

The industry type determining unit 503 refers to the industry type glossary stored in the industry type glossary storage 514 to determine the industry type with respect to a web page judged to be a personal home page or a web page of a bulletin board by making a judgment as to which industry type causes more keyword matchings.

The statement and thread extractor 504 extracts a statement included in the web page of the bulletin board, and extracts a thread which constitutes an argument as to a specific topic with some statements. In this processing, a statement is cut out based on a repeated pattern of predetermined tags in the HTML source codes. In addition, the thread is extracted based on "Re:" phrases included in the title of a statement, links to the former or latter statement, and/or the like. With respect to the personal homepage, one web page is treated as one statement, or for example, a paragraph having a predetermined size is cut out as one statement. Incidentally, there is also a case where one web page is treated as a thread.

The company specifying unit 505 uses the company name dictionary stored in the company name dictionary storage 515 and specifies a company name, which is talked about, from a character string appearing in the statement and/or the thread. The company name dictionary includes a URL company name dictionary and an abbreviation name dictionary. There is also a case where a securities code of a company talked about and/or a company URL is specified by using the URL company name dictionary.

The source search unit 506 extracts a URL, which can be the basis of the statement, and/or information of the mass media such as newspapers and/or magazines in the statement and/or the personal homepage. This processing uses the mass media dictionary including company names relating to the mass media such as newspapers and/or magazines, names of newspapers and/or magazines, and the like. The mass media dictionary is stored in the mass media dictionary storage 516.

The statement and thread analyzer 507 analyzes the contents of the statement and/or thread, and acquires information as to genres (e.g. product information, company information, stock price information, environment activity information, or the like) of the topic of the statement and/or thread, and/or information of evaluation as to a company of the topic of the statement and/or thread. With respect to the evaluation, for example, it judges whether the statement and/or thread has a good evaluation or a bad evaluation. As fro the genre and/or the evaluation, learning is carried out by using correct answer sets of genres and/or correct answer sets of good evaluations and bad evaluations, which are previously prepared for each industry type, to generate a rule set, and this rule set is stored in the rule set storage 517. The statement and thread analyzer 507 uses this rule set to carry out a processing. Besides, the statement and thread analyzer 507 judges whether the statement includes information expressing a speaker's identity such as a mail address or a handle, and/or information indicating the basis such as the URL, and determines the reliability of the statement on the basis of that information. With respect to the URL, the statement and thread analyzer 507 confirms whether it is included in the company name dictionary by accessing the company name dictionary storage 515, and with respect to the handle, it refers to the data in the handle DB 518 to judge whether it is included. The processing results of the statement and thread analyzer 507 are stored in the analyzed data storage 510.

The statistical processor 508 executes various statistical processings. Although a predetermined statistical processing may be executed in advance, a statistical processing specified by the user operating the user terminal 3 may be executed. For example, the statistical processor 508 sums up the number of the respective evaluations as to a specified company, sums up the number of statements for each company, or generates data as to a temporal change. There is also a case where the results of the statistical processing are stored in the analyzed data storage 510.

The user interface unit 509 transmits the data stored in the analyzed data storage 510 to the user terminal 3 in response to a request from the user terminal 3. For example, the user interface unit 509 executes such a processing to rearrange statements and/or threads on the basis of the referenced degree ranking and/or the reliability and to transmit them to the user terminal 3. Besides, if a statistical processing is needed, the user interface unit 507 causes the statistical processor 508 to perform a predetermined statistical processing by using the data stored in the analyzed data storage 510, and transmits the results to the user terminal 3. For example, there is also a case where the data is processed into a graph or the like and is outputted.

The search engine 521 executes a search of contents information stored in the archive 512 in response to a request from the user operating the user terminal 3. A search log of the executed search is stored in the search log storage 511.

The glossary generator 520 uses the contents information stored in the archive 512, the link topology data registered in the link topology DB 519, the search log stored in the search log storage 511, and/or the like to generate the industry type glossary and store it into the industry type glossary storage 514, and to generate the company name dictionary including formal and informal edition URL company name dictionaries, and the abbreviation name dictionary and store them into the company name dictionary storage 515. Furthermore, the glossary generator 520 obtains log data stored in the proxy log storage 84 of the proxy server 8 and/or log data stored in the search log storage 91 of the search site server 9, stores the log data into the search log storage 511, and carries out a processing for generating glossaries by using the log data. Namely, it generates data items of the industry type glossary to store them into the industrial type glossary storage 514, and also generates data items of the company name dictionary to store them into the company name dictionary storage 515. Besides, it carries out a processing for specifying the URLs to be analyzed, by using the data stored in the search log storage 511, and outputs the processing results into the analyzed data storage 510.

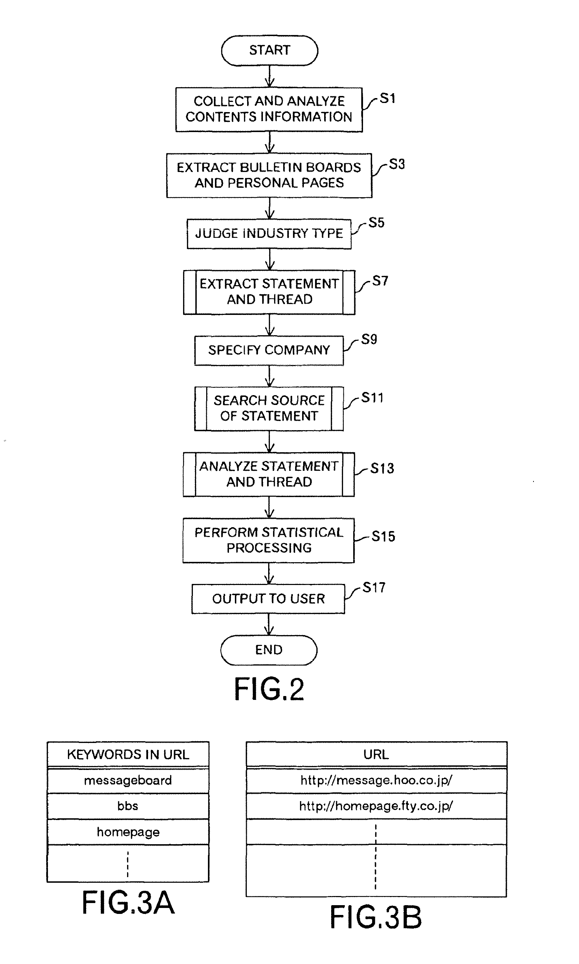

Next, the contents of the processing of the system shown in FIG. 1 will be described using FIGs. 2 to 22. FIG. 2 shows an outline of the processing in this embodiment. First, a contents collection and analysis processing by the contents collecting and analyzing unit 501 is performed (step S1). As described above, in the step S1, the data of the web pages opened by the many web servers 7 connected to the Internet 1 are collected, and the reference relations based on the links are analyzed, so that the referenced degree of each web page is calculated, and the ranking values are calculated from the referenced degrees. Then, the contents collecting and analyzing unit 501 stores the collected data of the web pages and the ranking values of the referenced degrees into the archive 512, and stores the reference relations based on the links as the link topology data into the link topology DB 519.

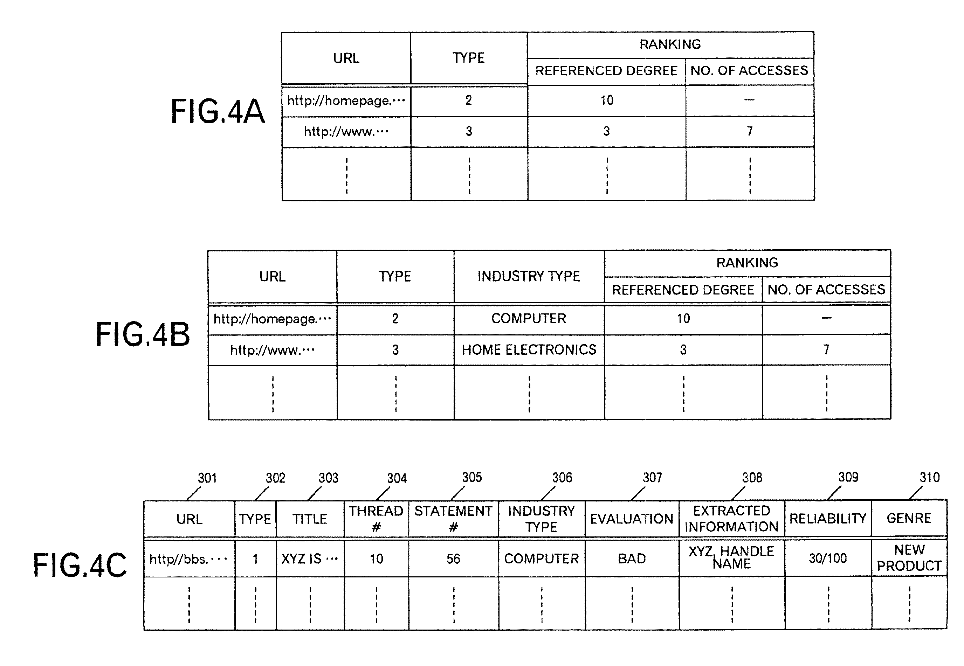

Next, the web page classifier 502 extracts a bulletin board and a personal homepage from the contents information collected by the contents collecting and analyzing unit 501 and stored in the archive 512 (step S3). In this processing, the bulletin board element data stored in the bulletin board element storage 513 is used. The bulletin board element data includes keywords, such as bbs, messageboard, and homepage, often used for the URL of the bulletin board and the personal homepage as shown in FIG. 3A, and URLs of generally known bulletin boards and personal homepages as shown in FIG. 3B. Besides, there is also a case where the bulletin board element data includes data to specify CGI often used for the bulletin board and/or the personal homepage, data of the HTML source codes of the web page often appearing on the bulletin board and/or the personal homepage, and the like. That is, with respect to the web page to be processed, the web page classifier 502 judges whether the URL or its part coincides with the URL or the keywords included in the bulletin board element data (FIGS. 3A and 3B) stored in the bulletin board element storage 513. Besides, it is judged whether the CGI used for the web page to be processed is the CGI often used for the bulletin board and/or the personal homepage. Furthermore, the HTML source codes of the web page to be processed are analyzed to check the existence of a repeated pattern of specific tags often used for the bulletin board and/or the personal homepage. These processings are carried out in descending order of the ranking value of the referenced degree of the web page. As a result of these processings, for example, as shown in FIG. 4A, the URL of the web page judged to be the bulletin board or the personal homepage, a type (e.g., "1" is stored if it is the bulletin board, "2" is stored if it is the personal homepage, and "3" is stored if it is other type.), and the referenced degree as the ranking of the web page are stored in, for example, the analyzed data storage 510. Incidentally, the number of accesses in Fig. 4A will be explained later.

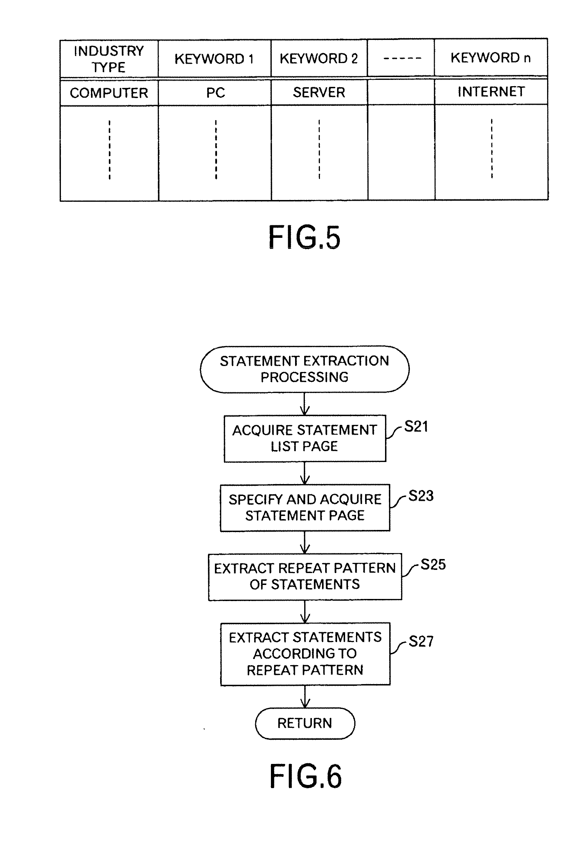

Then, the industry type determining unit 503 refers to the industry type glossary stored in the industry type glossary storage 514 with respect to the web page judged to be the bulletin board or the personal homepage, and judges the industry type of the topic of the web page (step S5). In the industry type glossary, as shown in FIG. 5, one or plural keywords (n (n is an integer) keywords in the drawing) are registered so as to correspond to a name of an industry type. Accordingly, the industry type determining unit 503 carries out matching between terms included in the web page to be processed and the keywords registered in the industry type glossary, and judges the industry type in which the number of matched keywords is large as the industry type of the web page to be processed. As a result of such a processing, for example, as shown in FIG. 4B, the URL of the web page judged to be the bulletin board or the personal homepage, a type (e.g. "1" is stored if it is the bulletin board, "2" is stored if it is the personal homepage, and "3" is stored if it is other type.), the industry type of the topic of the web page, and the referenced degree as the ranking of the web page are stored in, for example, the analyzed data storage 510. Incidentally, the number of accesses in Fig. 4B is explained in later.

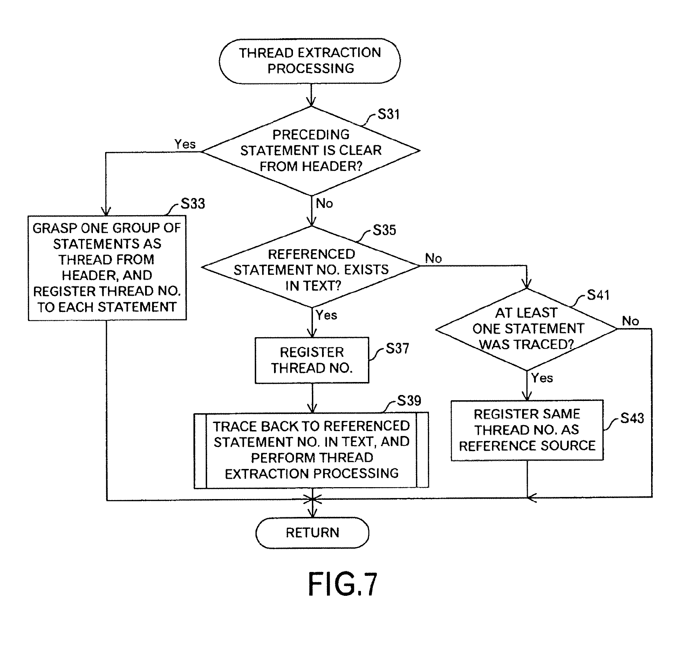

Next, the statement and thread extractor 504 extracts a statement included in the web page of the bulletin board, and extract a thread as a statement group in a case where some statements discusses a specific topic collectively (step S7). Here, a processing of extracting a statement and processing of extracting a thread will be separately described using FIGs. 6 and 7.

First, the extraction processing of the statement will be described using FIG. 6. With respect to a web page judged to be a bulletin board, the statement and thread extractor 504 analyzes its links to extract URLs of web pages designated by links with a character string, for example, "to list" or "list of bulletin boards", acquires data of the web pages of such URLs as data of a statement list page, and stores it into a storage device (step S21). The statement and thread extractor 504 analyzes the contents of the statement list page, specifies links to the respective enumerated statement pages, acquires data of the statement page, and stores it into the storage device (step S23). There is also a case where plural statements are included in the statement page. Accordingly, the statement and thread extractor 504 analyzes the HTML source codes of the statement page, extracts a repeat pattern of the statement, and stores it into the storage device (step S25). For example, there is a case where a statement number, a date, a handle name and the like, such as "30: 01/10/2002 22:46 ID:QpKfFIhK", repeatedly appear in each statement as a header, and this repeat pattern is extracted. Besides, there is also a case where each statement is put in a frame. In such a case, since a TABLE tag is repeated in a specific pattern, the repeat pattern of this TABLE tags is extracted. Then, in accordance with the extracted repeat pattern, the statement and thread extractor 504 cuts out a statement, and stores the statements into the storage device (step S27). However, in a case where the length of the statement is a predetermined length or less, the statement may be discarded.

Next, the extraction processing of the thread will be described using FIG. 7.
In a bulletin board, as shown below,
" · Re:XX contribution of Mr. AAAA Monday October 15, @01:42PM
· Re:XX contribution of Mr. AAAA Monday October 15, @01:45PM
· Re:XX contribution of Mr. AAAA Monday October 15, @03:01PM
· Re:XX contribution (score:1) of Mr. BBBB, Tuesday October 16, @07:16AM",
there is also a case where a statement group relating to the preceding statement "XX" is apparent from the characters such as "Re:".
On the other hand, as shown below,
"58 Name: Mr. CCCC 01/10/21 21:11
> 56
With respect to this statement, ...",
there is also a case where a preceding statement or a relevant statement is unclear from only the header of each statement. Accordingly, the statement and thread extractor 504 judges whether a preceding statement can be extracted from the header by using characters of "Re:" or the like (step S31). As in the first example mentioned above, if the preceding statement is clear (step S31: Yes route), the statement and thread extractor 504 grasps one statement group as a thread from the header, gives a thread number to the statement group, and registers the thread number for each statement (step S33). In the first example, the statement of "XX" and the above four statements constitute one thread, and the same thread number is registered. Then, the processing returns to the original processing. The registered data will be described later.

On the other hand, in a case where a preceding statement can not be extracted from the header (step S31: No route), the statement and thread extractor 504 judges whether there is statement identification information such as a statement number of a referenced preceding statement (step S35). If such information exists (step S35: Yes route), the statement and thread extractor 504 registers a thread number for the statement to be processed (step S37). Incidentally, when a processing of tracing to the preceding statement has been already executed, a thread number given before the tracing is used, and in a case where the processing of tracing has not been executed, a thread number is newly given. Then, retroactively to the referenced preceding statement, the statement and thread extractor recursively carries out the thread extraction processing of FIG. 7 (step S39). On the other hand, in a case where the statement number of the preceding statement is not included in the text (step S35: No route), the statement and thread extractor 504 judges whether or not at least one statement was traced (step S41). This is because for example, there is a case of an isolated statement or there is also a case of a root statement. In the case of the isolated statement (step S41: No route), the processing returns to the original processing. Incidentally, even in the case of the isolated statement, if it is determined that even one statement constitutes a thread, the statement and thread extractor 504 may newly give a thread number, and register it. In case it is judged that at least one statement was traced (step S41: Yes route), the statement and thread extractor 504 registers the same thread number as the reference source for the statement (step S43). Then, the processing returns to the original processing.

Thus, in a case where a thread is known from a header, a statement group is specified by the header, and in a case where it is not known from the header, statements are traced recursively by using a statement number existing in the text, so that the thread is grasped. The technique for this processing is disclosed in, for example, United States Patent Application Publication No. 2001-0018698-A1.

Incidentally, in the case of a personal homepage, one web page is treated as one statement. In this case, for example, all pages, which can be referenced from the top page of the personal homepage may be treated as a thread, or the respective pages can be treated as isolated statements. Besides, there is also a case where one page is long. In such a case, it may be divided by, for example, an h1 tag of the HTML source codes, and the divided portions may be treated as one statement.

When the extraction processing of the statement and the thread at the step S7 is performed, data of part of the table shown in FIG. 4C is registered. The example of FIG. 4C includes a column 301 for a URL of a web page including a statement, column 302 to store type data, column 303 for a title of a statement, column 304 for a thread number (#) , column 305 of a statement number (#), column 306 of an industry type, column 307 of an evaluation as to an object of a statement, column 308 to store extracted information, column 309 of reliability, and column 310 of a genre. In the column 302 to store the type data, "1" is stored in the case of the bulletin board, "2" is stored in the case of the personal homepage, and "3" is stored in other cases. With respect to the title, there is a case of a title of a statement, or there is also a case of a value for TITLE tags or H1 tags. With respect to the evaluation, for example, a good or bad evaluation is stored. This will be described later. The extracted information includes a company name, securities code, reference statement number, information of mass media and/or URL as the basis of the statement, mail address and/or handle name as information indicating the identity. The reliability includes a referenced degree of the page including the statement, and a value of the reliability calculated below. The number of accesses may be registered in a case where the number of accesses has been grasped. The genre is a topic common to the respective industry types, such as product information, company information, stock price information, or environment activity information.

When the processing up to the step S7 is performed, values are stored in the column 301 for the URL, column 302 to store the type data, column 303 for the title, column 304 of the thread number, and column 305 of the statement number.

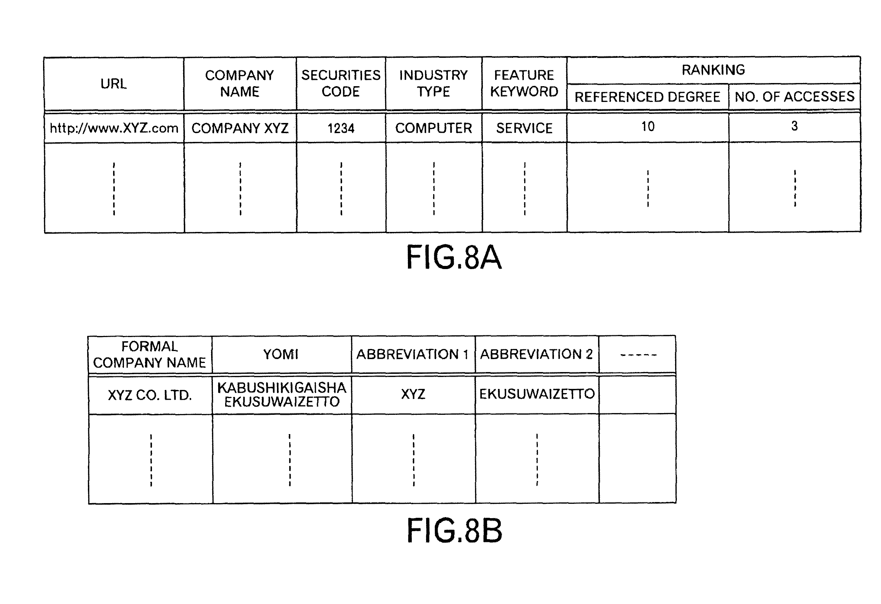

Returning to the explanation of FIG. 2, next to the step S7, the company specifying unit 505 performs a processing to specify a name of a company, which is an object of the statement (step S9). In this processing to specify the name of the company, the company specifying unit 505 refers to the company name dictionary stored in the company name dictionary storage 515. The company name dictionary includes the URL company name dictionary and the abbreviation name dictionary. Examples of these dictionaries are shown in FIGs. 8A and 8B. FIG. 8A shows the example of the URL company name dictionary. In the example of FIG. 8A, a site URL, a company name, a securities code, a name of an industry type, one or plural feature keywords, and ranking information of the site URL (referenced degree and the number of accesses) are stored for each company. The feature keywords may includes related URLs. Besides, the ranking information of the site URL is registered if it is obtained in the processing explained later. FIG. 8B shows the example of the abbreviation name dictionary. In the example of FIG. 8B, a formal company name, its yomi and one or plural abbreviations are stored. By using these dictionaries, the company specifying unit 505 judges whether words included in the statement to be processed coincide with the company name, abbreviation, and securities code in the dictionaries to specify the company name. Incidentally, not only the company name but also the securities code and/or the company URL may be specified. Also with respect to the personal homepage, the company specifying unit 505 similarly specifies the name of the company as the object of the statement. Here, the specified company name, securities code and the like are stored in the column 308 to store the extracted information in FIG. 4C. Furthermore, in a case where words included in the statement or the like coincide with a predetermined number of feature keywords and more for any one of companies, which are stored in the URL company name dictionary, the company name of the pertinent company may be specified as an object of the statement or the like.

Next, the source search unit 506 extracts the URL and/or the information of the mass media such as the name of a newspaper and/or magazine, which can be the basis of the statement (step S11). Incidentally, with respect to the information of the mass media, the mass media dictionary stored in the mass media dictionary storage 516 is used. Besides, although FIG. 1 does not show, the source search unit 506 may refer to the company name dictionary stored in the company name dictionary storage 515, and if the URL is included in the statement, the source search unit 506 may judge whether the URL is the URL registered in the company name dictionary to register data concerning the existence of the registration in the analyzed data storage 510. The mass media dictionary includes information as to, for example, company names relating to the mass media, and names of newspapers and/or magazines published by those companies.

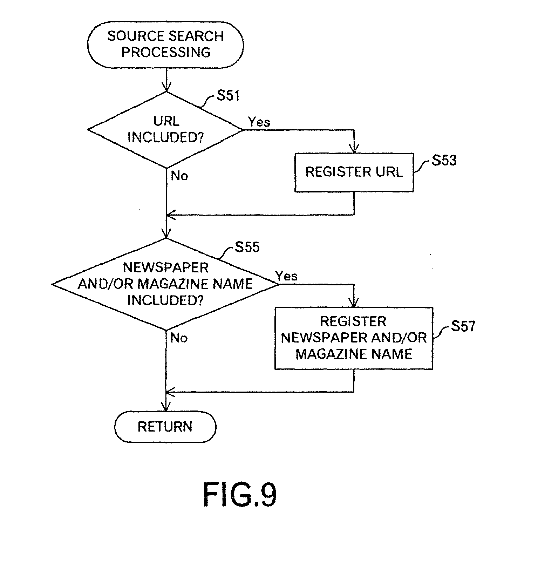

FIG. 9 shows the details of a source search processing of the step S11. First, the source search unit 506 judges whether a URL is included in the statement or the personal homepage (step S51). Incidentally, a processing may be such that it is judged whether a URL registered in the company name dictionary is included. If a URL is included in the statement or the personal homepage, the source search unit 506 registers the URL in the analyzed data storage 510 (step S53). For example, it is stored in the column 308 to store the extracted information in FIG. 4C. In addition, as described above, the information as to whether or not it is the URL registered in the company name dictionary may be registered in the analyzed data storage 510. Besides, in a case where it is judged at the step S51 that the URL is not included in the statement or the personal homepage, or after the URL is registered in the analyzed data storage 510 at the step S53, the source search unit 506 judges whether the name of a newspaper and/or magazine is included in the statement or the personal homepage (step S55). Namely, the source search unit 506 judges whether or not the name of the newspaper and/or magazine registered in the mass media dictionary appears in the statement or the personal homepage. In case the name of the newspaper and/or magazine registered in the mass media dictionary is detected, the source search unit 506 registers the name of the newspaper and/or magazine in the analyzed data storage 510 (step S57). For example, it is stored in the column 308 to store the extracted information in FIG. 4C.

Returning to the processing of FIG. 2, the statement and thread analyzer 507 executes an analysis processing of the statement, thread and the personal homepage by using the company name dictionary stored in the company name dictionary storage 515, rule set, which is previously generated to specify the evaluation of the object of the statement and/or the genre of the topic and is stored in the rule set storage 517, and handle DB 518 as to the handle name used in the bulletin board or the like (step S13). In the analysis processing, the wording of the statement and thread is compared with the rule set registered in the rule set storage 517 to determine the genre of the topic, and the evaluation of the objective company of the statement, such as a good or bad evaluation. Besides, the reliability of the statement is determined based on whether a URL as the basis of the statement is recited, whether the URL is the URL registered in the company name dictionary, or whether a mail address and/or handle name to indicate the speaker's identity are included.

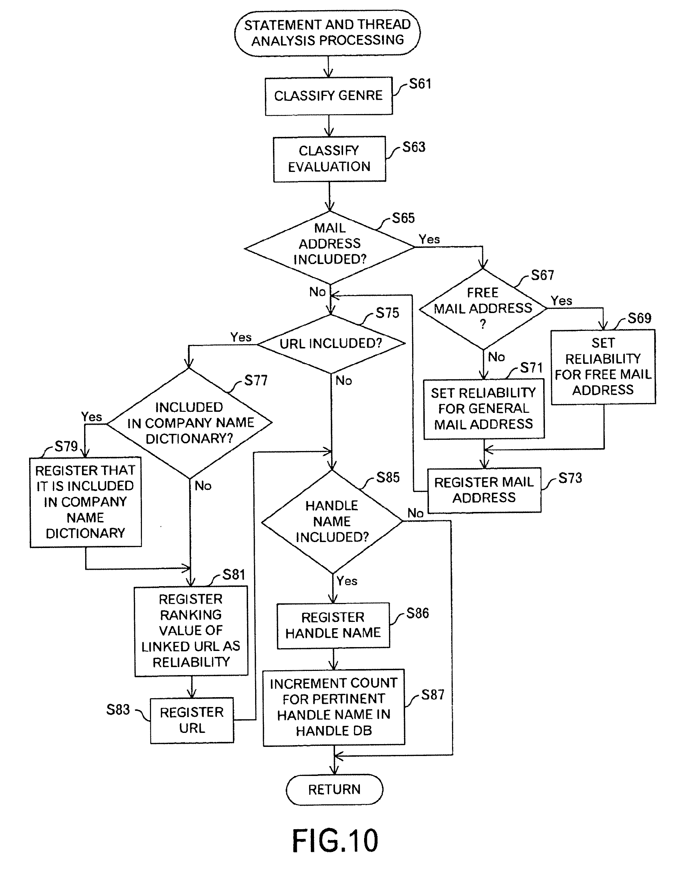

The details of the step S13 are shown in FIG. 10. Incidentally, FIG. 10 shows a processing for one statement or one personal homepage. First, the statement and thread analyzer 507 determines the genre of the topic of the statement or the like, and registers the genre in the analyzed data storage 510 (step S61). For example, it is stored in the column 310 of the genre in FIG. 4C. With respect to the classification of the genre for the topic of the statement or the like, techniques disclosed in United States Patent Application Publication 2002-0069197-A1 and the like can be used. Besides, the statement and thread analyzer 507 classifies the evaluation as to the objective company of the statement or the like, and registers the information of the evaluation in the analyzed data storage 510 (step S63). For example, it is stored in the column 307 of the evaluation in FIG. 4C. The classification of evaluation is such a classification that a good evaluation to the company is done or a bad evaluation is done. With respect to the processing of these step S61 and step S63, the statement and thread analyzer 507 makes a judgment by using the rule set as to the genre of the topic of the statement or the like and the rule set as to the good evaluation or the bad evaluation, which are stored in the rule set storage 517. These rule sets are generated for each industry type. This is because it is conceivable that the expression as to the genre and/or the wording as to the evaluation is different between industry types. As to the genre, there is also a case where the bulletin board itself is categorized, and that information may be used. As to the evaluation, it may make a judgment as to not only the good evaluation and the bad evaluation, but also as to whether the evaluation is concerned with a predetermined viewpoint.

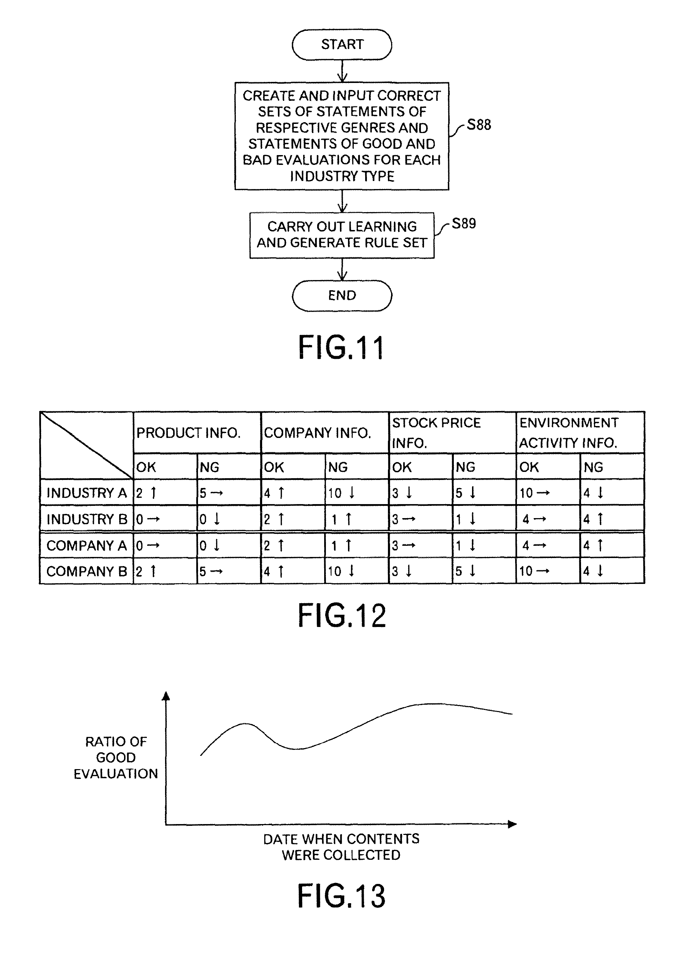

For example, the statement and thread analyzer 507 carries out a processing as shown in FIG. 11 to generate the rule set. That is, correct answer sets of statements for respective genres, and statements of good evaluation and bad evaluation for respective industry types are manually created, and are inputted to the statement and thread analyzer 507 having, for example, an expert system function (step S88). Then, the statement and thread analyzer 507 carries out learning of the correct answer sets, generates the rule set, and stores it in the rule set storage 517 (step S89). Incidentally, with respect to the classification of the evaluation as to the objective company or the like of the statement or the like, techniques disclosed in United States Patent Application Publication 2002-0069197-A1 and/or JP-A-2002-202984 can be used.

Returning to the processing of FIG. 10, next, the statement and thread analyzer 507 judges whether a mail address is included in the statement or the like (step S65). In case the mail address is included in the statement or the like (step S65: Yes route), it judges whether or not the mail address is the mail address of a free mail (step S67). Whether or not it is the mail address of the free mail can be judged from the pattern of the domain portion of the mail address or the like. In case it is the mail address of the free mail (step S67: Yes route), it sets the reliability corresponding to the mail address of the free mail, and registers it in the column 309 of the reliability in the analyzed data storage 510 (step S69). Incidentally, ranking information (referenced degree. The number of accesses may be registered if the number of accesses is grasped.) of the page of the statement or the like is also registered in the column 309 of the reliability. On the other hand, in case it is not the mail address of the free mail (step S67: No route), it sets the reliability corresponding to the general mail address, and registers it in the column 309 of the reliability (step S71). In general, as information to clarify the speaker's identity, the general mail address has higher reliability than the mail address of the free mail, and accordingly, also with respect to the reliability, a higher value is given to the general mail address.

After the step S69 or step S71, the statement and thread analyzer 507 registers the detected mail address in the analyzed data storage 510 (step S73). For example, it is stored in the column 308 to store the extracted information in the analyzed data storage 510. Then, the processing proceeds to step S75.

Next, the statement and thread analyzer 507 judges whether a URL is included in the statement or the like (step S75). This is because the URL is often indicated as the basis of the statement. In case the URL is included in the statement or the like (step S75: Yes route), it judges whether the URL is included in the company name dictionary (step S77). In case the URL is included in the company name dictionary, the statement and thread analyzer 507 registers an indicia that the URL is included in the company name dictionary in the analyzed data storage 510 (step S79). For example, it is stored in the column 308 to store the extracted information. After the step S79 or in a case where it is judged at the step S77 that the URL is not included in the company name dictionary, the statement and thread analyzer 507 registers the ranking value (referenced degree) of the linked URL as the reliability in the analyzed data storage 510 (step S81). For example, it is registered in the column 309 of the reliability in the analyzed data storage 510. Incidentally, in a case where the mail address is also included in the statement or the like, the reliability as to the mail address and the reliability as to the URL may be added. Besides, the ranking information (referenced degree. The number of accesses may be registered if the number of accesses is grasped.) of the statement or the like is also registered. Then, it registers the URL in the analyzed data storage 510 (step S83). For example, it is stored in the column 308 to store the extracted information. The processing proceeds to step S85.

Next, the statement and thread analyzer 507 judges whether a handle name is included in the statement or the like (step S85). The handle name is often used in the bulletin board and is information to specify a speaker, however, it cannot completely specify the speaker. Accordingly, in this embodiment, the number of statements is used as an index. In a case where the handle name is included in the statement or the like, the statement and thread analyzer 507 registers the handle name in the analyzed data storage 510 (step S86) . For example, it is stored in the column 308 to store the extracted information. Then, the statement and thread analyzer 507 searches the handle DB 518 for the handle name, and increments its count if it is found (step S87). In a case where the handle name has not been registered in the handle DB 518, the handle name and count (here "1") is registered. Then, the processing proceeds to a next processing. In a case where it is judged that the handle name is not included in the statement or the like, the processing proceeds to a next processing.

Incidentally, with respect to the reliability of the handle name, count values are used which are registered in the handle DB 518 at the point of time when the processing as to the entire contents information collected once by the contents collecting and analyzing unit 501 is completed. That is, at the point of time when the processing as to the entire contents information is completed, the statement and thread analyzer 507 registers the count values as to the respective handle names in the handle DB 518 in the analyzed data storage 510.

In a case where the reliability is finally compared, a normalization processing may be required. For example, in a case where the reliability of "30" is given to a general mail address and the reliability of "10" is given to a mail address of a free mail, there is a case where with respect to a referenced degree of a link destination URL used as the reliability of the URL, it may be necessary to use a value obtained by dividing it by 100, or also with respect to the count value of the handle name, it may be necessary to use a value obtained by dividing it by 20, for example.

By the processing of the step S13 in FIG. 2, the information is registered in the column 309 of the reliability, column 310 of the genre, and column 308 to store the extracted information in the analyzed data storage 510.

In FIG. 2, the statistical processor 508 next performs various statistical processings (step S15). The statistical processor 508 calculates information, for example, with respect to the total of good or bad evaluations for the respective genres in the respective industry types and the ratio for the whole, the aggregation of the company names appearing in the statement, aggregation of good or bad evaluations, information as to what statements from what viewpoint abound, or information as to what evaluations abound. In addition, it may arrange data in order of the reliability of the statement, the ranking of the referenced degree, or the like.

For example, the statistical processor 508 generates information as shown in FIG. 12. Here, with respect to each of product information, company information, stock price information, and environment activity information, the number of statements of good evaluation (OK) and the number of statements of bad evaluation (NG) for Industry A, Industry B, company A and company B are included. An upward arrow indicates that the number is increased from that at the time of the preceding processing, a horizontal arrow indicates that the number is almost the same as that at the time of the preceding processing, and a downward arrow indicates that the number is decreased from that at the time of the preceding processing.

Besides, there is also a case where the statistical processor 508 generates information as shown in FIG. 13. That is, a graph shows a temporal change of the ratio of good evaluation in the statements relating to the company A.

Such results of the statistical processing are registered in, for example, the analyzed data storage 510. Then, the user interface unit 509 reads out the information registered in the analyzed data storage 510 in response to a request from the user terminal 3, and transmits it to the user terminal 3 (step S17). The user terminal 3 receives data from the information collecting and analyzing system 5, and display it on the display device. In addition to the data processed by the statistical processor 508, the user interface unit 509 may sort data in accordance with, for example, the reliability of the statement and/or the ranking such as the referenced degree, and transmit the results to the user terminal 3, or may search the analyzed data storage 510 by a keyword or the like specified by the user, and transmit the search results to the user terminal 3.

The user can obtain information as to how many statements of what evaluation were made to what industry type and/or company, and information as to the source of the statements from the display contents on the display device of the user terminal 3. In a side of stock dealings, it becomes possible to obtain information as to whether there is information equivalent to "circulation of rumor", and information as to the source of such information. In addition, with respect to such obtained information, by using the reliability and/or the ranking of the referenced degree or the like, it also becomes possible for the user to make a judgment while taking the influence degrees of the statements or the like into account.

The data of the aforementioned industry type glossary storage 514 and company name dictionary storage 515 may be generated by any methods.

However, it is also possible to generate them by using the contents information collected by the contents collecting and analyzing unit 501. In this embodiment, by using a technique for distinctively extracting and classifying information of a specified industry type or a field from a large amount of information, the glossary generator 520 in FIG. 1 generates the industry type glossary, the URL company name dictionary, and the abbreviation name dictionary.

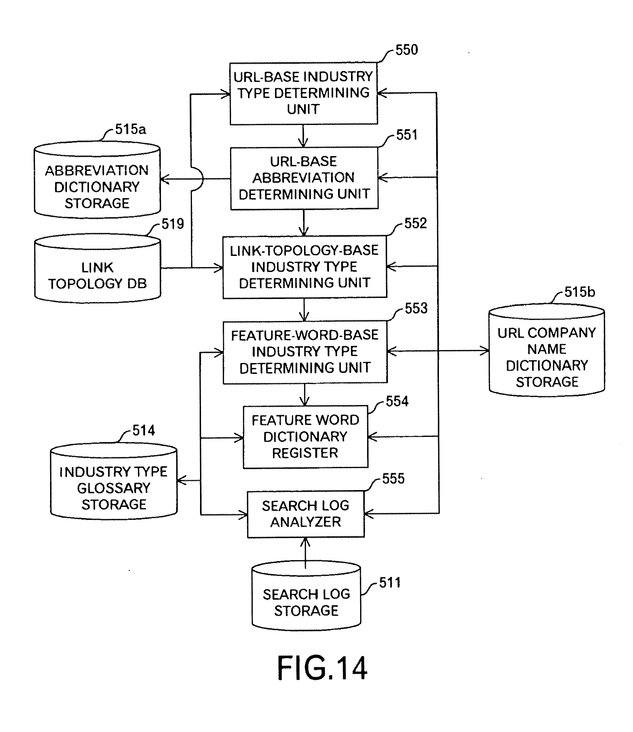

FIG. 14 shows a functional block diagram of the glossary generator 520 in FIG. 1. The glossary generator 520 includes a URL-base industry type determining unit 550, URL-base abbreviation determining unit 551, link-topology-base industry type determining unit 552, feature-word-base industry type determining unit 553, feature word dictionary register 554, and search log analyzer 555. These processing units can access the URL company name dictionary storage 515b. Besides, the URL-base industry type determining unit 550 and link-topology-base industry type determining unit 552 performs a processing by using the data of the link topology DB 519. The feature-word-base industry type determining unit 553, feature word dictionary register 554, and search log analyzer 555 can access the industry type glossary storage 514. Besides, the search log analyzer 555 can access the search log storage 511. It is not shown in the figure, but the search log analyzer 555 can access the proxy server 8 and/or the search site server 9 via the Internet 1. Besides, a part of the processing result of the search log analyzer 555 is stored into the analyzed data storage 510.

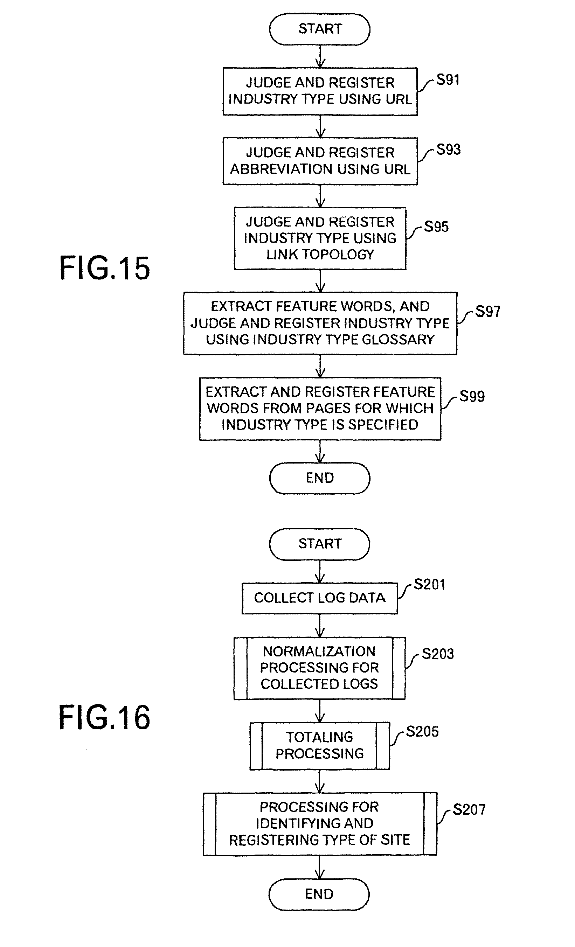

Next, the processing of the glossary generator 520 shown in FIG. 14 will be described using FIGs. 15 to 21. By using the contents information collected by the contents collecting and analyzing unit 501 and stored in the archive 512, and the link topology data stored in the link topology DB 519, the URL-base industry type determining unit 550 performs a processing for judging and registering an industry type using URLs (step S91). First, the URL company name dictionary manually maintained to some degrees is used. Then, the URL-base industry type determining unit 550 judges the industry type of the company opening the web page to be processed, by comparing a URL of a web page to be processed with URLs registered in the URL company name dictionary. For example, in a case where an item of "http://www.xxx.com. XXX Co., Ltd., Computer" is registered in the URL company name dictionary, if the URL of the web page to be processed is "http://www.ist.xxx.com", because "xxx" is common, a candidate of the industry type of the company opening the web page to be processed to the public is made "computer". Then, from the link topology data stored in the link topology DB 519, the URL-base industry type determining unit 550 judges whether there is a mutual or one-way link between the web page of "http://www,xxx.com" and the following pages and the web page of "http://www.ist.xxx.com" and the following pages. If it is confirmed that there is a link, the URL-base industry type determining unit 550 extracts the company name from the title of the web page to be processed or the like, and then registers the company name, "http://www.ist.xxx.com", and "computer" as the industry type in the URL company name dictionary.

Next, the URL-base abbreviation determining unit 551 refers to the URL company name dictionary stored in the URL company name dictionary storage 515b, and performs a processing for judging and registering abbreviations using URLs (step S93). In a case where a description of <a href ="http://www.xxx.com"> three eks </a> exists in the web page to be processed, the URL-base abbreviation determining unit 551 searches the URL company name dictionary by using "http://www.xxx.com". If registered, the formal name of the company using "http://www.xxx.com" can be obtained. Then, the URL-base abbreviation unit 551 searches the abbreviation name dictionary stored in the abbreviation dictionary storage 515a for the formal name, and confirms whether the formal name is registered. If registered, it confirms whether "three eks" is registered so as to correspond to the formal name. If it is not registered, it registers "three eks" in the abbreviation dictionary. In a case where the formal name is not registered, it registers the formal name and the abbreviation of "three eks". However, it is necessary to confirm that a word to be registered is not a typical word, which is not an abbreviation, such as "here".

Then, the link-topology-base industry type determining unit 552 uses the link topology data stored in the link topology DB 519 to perform a processing for judging and registering an industry type (step S95). The link-topology-base industry type determining unit 552 judges that a page, which has a close link relation to company sites registered in the URL company name dictionary, is a web page open by a company of the same industry type, and registers the URL of the page, and the company name and industry type, that are extracted by using the information in the page, in the URL company name dictionary. If the URL or the like is already registered, the industry type is registered. In a case where a hub site of a specific industry type can be extracted from the link topology data, the link-topology-base industry type determining unit 552 judges that a company whose page is linked from the hub site belongs to the same specific industry type, and registers the URL of the linked page, and the company name and industry type, that are extracted by using the information in the page, in the URL company name dictionary. If the URL or the like is already registered, the industry type is registered.

Besides, the feature-word-base industry type determining unit 553 extracts feature words from the web page to be processed in accordance with a predetermined algorithm, searches the industry type glossary by the feature words, and performs a processing for judging and registering an industry type of the web page to be processed (step S97). In a case where feature words extracted from the web page coincide with terms registered in the industry type glossary for a specified industry type at a level equal to or higher than a predetermined reference, it judges that the industry type of the web page to be processed is the specified industry type. Then, the feature-word-base industry type determining unit 553 registers the URL of the web page, and the company name and industry type, that are extracted by using the information in the page, in the URL company name dictionary. If the URL or the like is already registered, the industry type is registered.

Furthermore, the feature word dictionary register 554 extracts feature words from the page for which the industry type is specified, and registers the feature words in the industry type glossary (step S99) . It extracts the feature words from the page for which the industry type is specified by the aforementioned processing and the like, and designates the extracted feature words as candidates to be included in the industry type glossary for the specified industry type. The feature word dictionary register 554 carries out such a processing for many pages, and in a case where a specific feature word is extracted for the same industry type at a predetermined number of times or more, the specific feature word is registered in the industry type glossary for the specified industry type. In addition, a feature word having a high extraction frequency is important, therefore feature words are registered in descending order of extraction frequency. The importance may be judged based on a degree how late the feature word appears. The industry type glossary may be divided into a formal edition and informal edition. For example, in a case where the web page to be processed is a bulletin board and/or a personal homepage, the extracted feature word is registered in the informal edition of the industry type glossary.

In this way, the glossary generator 520 maintains the industry type glossary, URL company name dictionary, and abbreviation dictionary by using the contents information registered in the archive 512.

Furthermore, the search log analyzer 555 of the glossary generator 520 carries out processings as shown in FIGs. 16 to 21.

FIG. 16 is a flowchart showing an outline of the processing by the search log analyzer 555. The search log analyzer 555 accesses the proxy server 8 and the search site server 9 via the Internet 1, obtains the log data stored in the proxy log storage 84 and search log storage 91, and stores it into the storage log storage 511 (step S201). Incidentally, this step may be carried out by a processing unit other than the search log analyzer 555 or an administrator of the information collection and analysis system 5. An example of the search log data obtained from the search log storage 91 is shown below. "2001/09/23:00:00:18url=http://mfy.mmbr.ease.com/iwte.html ref=http://para.cab.inwb.ne.jp/cgibin/para?Querystring=%8DL%93%8 7%83%5C%81%5B%83v base=NORMAL"

This example includes the date and time (2001/09/23:00:00:18), jump destination URL after "url=" (http://mfy.mmbr.ease.com/iwte. html), query after "ref=", and search state (base=NORMAL). Incidentally, the query includes an encoded search keyword as indicated by the under line. Besides, the above example does not include any IP address, but there is a case where the IP address is included.

Besides, an example of the log data obtained from the proxy log storage 84 is shown below. Incidentally, two logs are shown here. "1034817348.963 133.25.88.171 11441 GET http://para.cab.inwb.ne. jp/cgibin/para?Querystring=%8DL%93%87%83%5C%81%5B%83v" "1034817348.968 133.25.88.171 1441 GET http://taisen.mycom.co.jp/taisenlimage/side/top01,gif"

In this example, the first numeral indicates time information in a predetermined form. Besides, the IP address (133.25.88.171), object size, processing type (GET), and access destination URL are included. The first log indicates a query (URL) to the search site, which includes the encoded search keyword as indicated by the under line. The next log indicates the access to another URL by the same client. In this embodiment, it judges that the URL accessed by the same client after the query to the search site is the jump destination URL to carry out a processing. Namely, as for the log data obtained from the proxy log storage 84, data corresponding to one search log stored in the search log storage 91 is constructed by two logs.

Incidentally, the search site server 9 or proxy server 8 may be configured by plural servers for the load balance. In this case, because logs are dispersedly stored into the proxy log storage 84 or search log storage 91 of respective servers, it is necessary to obtain and collect data stored in the proxy log storages 84 or search log storages 91 of all servers into one storage, and sort it in order of date and time.

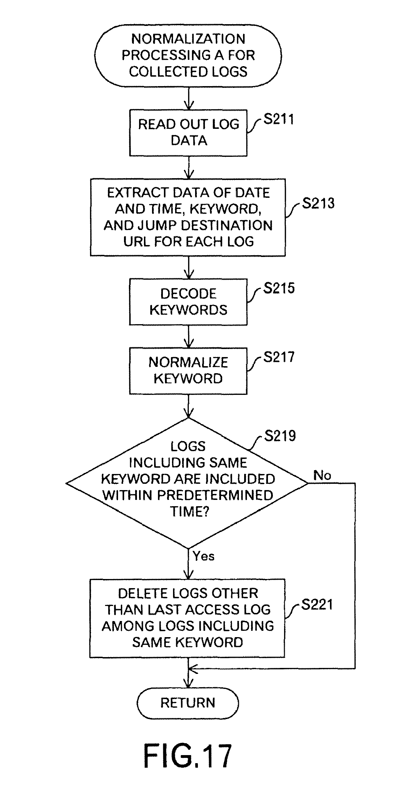

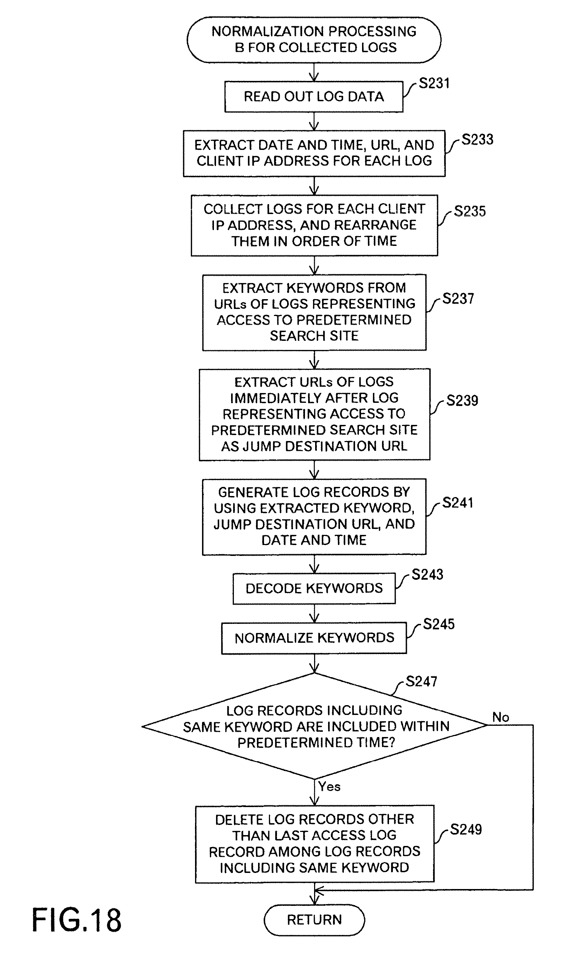

Next, the search log analyzer 555 carries out a normalization processing for the collected logs (step S203). Data is limited for subsequent processings, and the normalization of the search keywords or the like is carried out. The details of this processing are shown in FIGs. 17 and 18.

FIG. 17 shows a processing for data obtained from the search log storage 91. The search log analyzer 555 reads out data to be processed from the search log storage 511 into a memory (step S211). Then, it extracts data of date and time, keyword, and jump destination URL for each log of the read data, and stores it into the memory (step S213). Incidentally, because the keyword is encoded, it decodes the encoded keyword, and stores the decoded keyword into the memory (step S215). Then, it normalizes the decoded keyword, and stores the normalized keyword into the memory (step S217). Here, the normalization is a processing to adjust the notation, such as a processing to convert a full size of characters into a half size of characters, processing to convert capital letters into small letters, and processing to convert a half size of kana characters into a full size of kana characters. The adjustment of the notation is such a processing that "KOMPYUHTAH" is corrected to "KOMPYUHTA" in Japanese, and "studies" is corrected to "study" in English.

Then, the search log analyzer 555 judges whether logs of the same keyword are included within a predetermined time (step S219). This is to detect a case where the user consecutively carries out search instructions of the same keyword again and again by mistake, a case where the user looked at plural URLs listed in the search result in sequence, or the like. In the case where the user looks at plural URLs in sequence, the processing is carried out under an assumption that the lastly shifted jump destination URL is a web page that discloses the really necessary contents. In a case where it is judged that plural logs that include the same keyword exist within the predetermined time, it deletes logs other than the last access log among logs that include the same keyword (step S221). Then, this processing returns to the original processing. On the other hand, if it is determined that plural logs that include the same keyword do not exist within the predetermined time, this processing returns to the original processing.

By this configuration, because data unnecessary to be processed is deleted and the volume of data to be processed is reduced, the processing speed is increased, and the proper processing result can be obtained.

FIG. 18 shows a processing flow for data obtained from the proxy log storage 84. The search log analyzer 555 reads out data to be processed from the search log storage 511 into the memory (step S231). Next, it extracts date and time, URL and client IP address for each log in the read data, and stores them into the memory (step S233). It collects logs including such extracted data into each client IP address, and arranges them in order of time (step S235). Then, it extracts logs representing an access to a predetermined search site, extracts keywords from the pertinent logs, and stores them into the memory (step S237). For this step, the URLs of the search sites are registered in advance, and the logs representing the access to the search sites are extracted by using the registered URLs of the search sites. Then, it cuts out keywords in accordance with the regularity of the URL in the logs. When it extracts the logs representing the access to the search site, the search log analyzer 555 extracts the URLs of the logs immediately after the extracted logs representing the access to the search site as the jump destination URLs, and stores them into the memory (step S239).

It generates log records by sets of a keyword and jump destination URL, which were extracted like this, and date and time of the log including, for example, the keyword, and stores them into the memory (step S241). Because the keywords in this log records are encoded, it decodes them at this stage, and stores the decoded keywords into the memory (step S243). Then, it normalizes the decoded keywords, and stores the normalized keywords into the memory (step S245). This normalization is the same as that at the step S217.

Then, the search log analyzer 555 judges whether log records of the same keyword are included within the predetermined time (step S247) . If it is judged that plural logs that include the same keyword exist within the predetermined time, it deletes logs other than the log record concerning the last access among logs that include the same keyword (step S249). Then, this processing returns to the original processing. On the other hand, if it is judged that plural logs that include the same keyword do not exist, this processing returns to the original processing.

By this configuration, because data unnecessary to be processed is deleted and the volume of data to be processed is reduced, the processing speed is increased, and the proper processing result can be obtained.

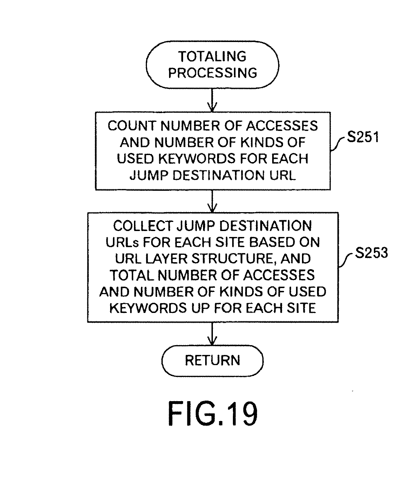

Returning to the explanation of FIG. 16, next, the search log analyzer 555 carries out a totaling processing (step S205). The details of the totaling processing are explained using FIG. 19.

As the totaling processing, the search log analyzer 555 counts the number of accesses and the number of kinds of keywords for each jump destination URL, and stores the count results into the memory (step S251). If two or more keywords are used at the same time, it can judge the set as one kind. Then, it collects the jump destination URLs into each site based on their hierarchical structures, totals the number of accesses and the number of kinds of used keywords for each site, and stores the totaling results into the memory (step S253). In this embodiment, the site means either a domain part of the URL, or a domain part and a directory part of one lower layer.

By doing so, it becomes possible to grasp the number of accesses and the number of kinds of used keywords for each page, and to grasp the number of accesses and the number of kinds of used keywords for each site under which each page is included.

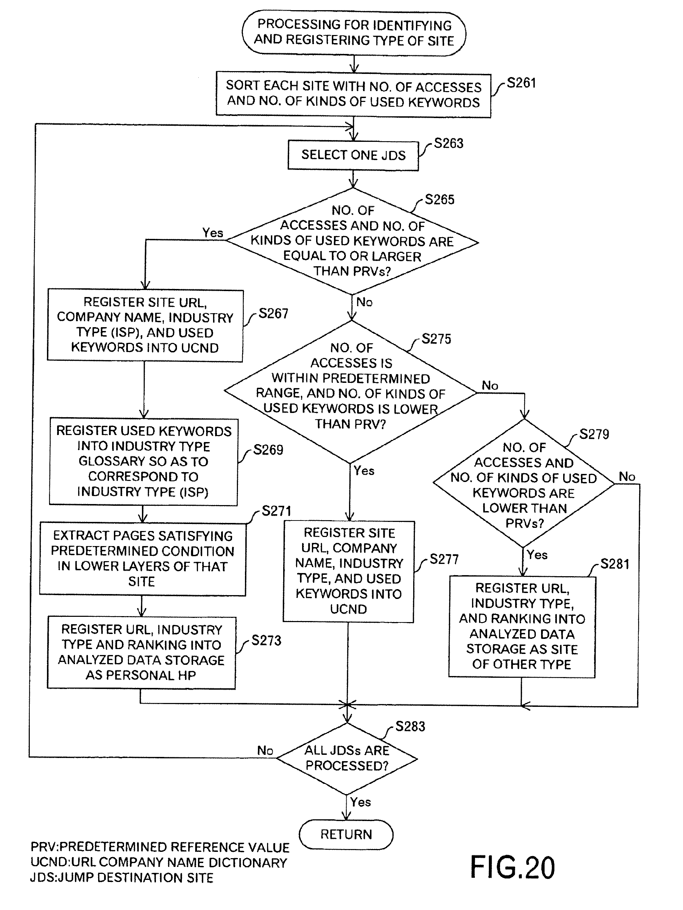

Returning to the explanation of FIG. 16, next, the search log analyzer 555 carries out a processing for identifying and registering types of sites (step S207). The details of this processing for identifying and registering types of sites are explained using FIG. 20. First, the search log analyzer 555 sorts each site by the number of accesses and the number of kinds of used keywords (step S261). By this step, the relative position of each site is grasped as to the number of accesses and the number of kinds of used keywords. Then, it selects one jump destination site (step S263), and judges whether the number of accesses and the number of kinds of used keywords for the jump destination site are equal to or larger than predetermined reference values (step S265). More specifically, it compares the number of accesses for the jump destination site with a predetermined reference value for the number of accesses, and compares the number of kinds of used keywords for the jump destination site with a predetermined reference value for the number of kinds of used keywords.

Then, if it is judged that the number of accesses and the number of kinds of used keywords are equal to or larger than the predetermined reference values (step S265: Yes route), it determines in this embodiment that the jump destination site is a site of ISP (Internet Service Provider), and registers the site URL, company name, industry type (ISP), used keywords, and ranking information into the URL company name dictionary if the site URL is not registered (step S267) . The company name is obtained from a value of the TITLE tag. In addition, as for the ranking information, the number of accesses and data of the referenced degree stored in the archive 512 are registered. Thus, the URL company name dictionary is expanded. Besides, it registers the used keywords into the industry type glossary so as to correspond to the industry type (ISP) (step S269). Thus, the industry type glossary is expanded.

Besides, it extracts web pages under the jump destination site, which satisfies a predetermined condition (step S271). The predetermined condition is a condition that the number of accesses is equal to or larger than a predetermined reference value, for example, or a condition that the number of accesses increases by a predetermined reference value or more in a case where data concerning the time change of the number of accesses can be obtained. Then, assuming that the URL of the extracted page is a personal homepage, it registers the URL, industry type, and ranking information into the analyzed data storage 510 (step S273). For example, they are stored into the analyzed data storage 510 as data of the type "2" at the stage of FIG. 4B. In this case, at this step, for example, the feature-word-base industry type determining unit 553 judges the industry type based on the industry type glossary from the contents of the web page. Incidentally, if this step was carried out instead of the step S3 in FIG. 2, they may be stored into the analyzed data storage 510 at the stage of FIG. 4A. In addition, as for the ranking information, the number of accesses, which was obtained in the aforementioned processing, and data of the referenced degree stored in the archive 512 are registered. The number of accesses is the ranking information to complement the referenced degree, and the degree of the importance, influence, confidence or the like is judged based on the number of accesses if the referenced degrees are identical. The processing shifts to step S283.

If it is not judged at the step S265 that the number of accesses and the number of kinds of used keywords are equal to or larger than the predetermined reference values (step S265: No route), it judges whether the number of accesses is within a predetermined range and the number of kinds of used keywords is lower than a predetermined reference value (step S275). For example, it judges whether the number of accesses is lower than the predetermined reference value described above but is equal to or lager than a second reference value, and further judges whether the number of kinds of used keywords is lower than the predetermined value. In this embodiment, sites satisfying such conditions are assumed to be a typical company site. Therefore, if it is judged that the number of accesses is within a predetermined range and the number of kinds of used keywords is lower than the predetermined reference value (step S275: Yes route), it registers the site URL, company name, industry type, ranking information, and used keywords into the URL company name dictionary if the site URL is not registered (step S277). Thus, the URL company name dictionary is expanded. Incidentally, for example, the feature-word-base industry type determining unit 553 judges the industry type based on the industry type glossary from the contents of the web page to register it into the URL company name dictionary. As for the company name, the value of the TITLE tag of the web page is used. The used keywords are registered as the feature keywords. As for the ranking information, the number of accesses, which was obtained in the aforementioned processings, and data of the referenced degree stored in the archive 512 are registered. Thus, the ranking information is also registered into the URL company name dictionary, and if a URL is detected as the information representing the information source in the personal homepage or the like, the confidence degree of the personal homepage or the like can be calculated based on the ranking information of the detected URL. The processing shifts to the step S283.

If it is not judged at the step S275 that the number of accesses is within the predetermined rage and the number of kinds of used keywords is lower than the predetermined reference value (step S275: No route), it judges whether the number of accesses and the number of kinds of used keywords are lower than predetermined reference values (step S279). Namely, it judges whether the number of accesses is lower than a predetermined reference value for the number of accesses, and whether the number of kinds of used keywords is lower than a predetermined reference value for the number of kinds of used keywords. If it is judged that the number of accesses and the number of kinds of used keywords are lower than the predetermined reference values (step S279: Yes route), in this embodiment, it is assumed that this site has the same level as that of the personal homepage. Therefore, it registers the URL, industry type, and ranking information into the analyzed data storage 510 (step S281). For example, at the stage of FIG. 4B, it stores them into the analyzed data storage 510 as data of the type "3". In this case, at this step, for example, the feature-word-base industry type determining unit 553 judges the industry type based on the industry type glossary from the contents of the web page. Incidentally, if this step is carried out instead of the step S3 in FIG. 2, the data may be stored into the analyzed data storage 510 at the stage of FIG. 4A. Besides, as for the ranking information, the number of accesses, which was obtained in the above-described processings, and data of the referenced degree stored in the archive 512 are registered. By carrying out such a processing, this embodiment can deal with a case where a small-scale organization such as an individual obtains a domain, and states its opinion and/or spreads a rumor. The processing shifts to the step S283. In a case where it is not judged at the step S279 that the number of accesses and the number of kinds of used keywords are lower than the predetermined reference values, the processing also shifts to the step S283.

At the step S283, it judges whether all of the jump destination sites are processed. If there is an unprocessed jump destination site, the processing returns to the step S263, and the processing for the unprocessed jump destination site is carried out. On the other hand, if it is judged that all of the jump destination sites are already processed, the processing ends.

By carrying out the above-described processings, the URL company name dictionary and industry type glossary are expanded from the search logs, and the noticeable site and/or URL can be specified.

Incidentally, the search log analyzer 555 of the glossary generator 520 also carries out a processing as described below, by using data stored in the search log storage 511, in addition to the processings shown in FIGs. 16 to 20.

The search log includes at least a time stamp (date and time), search keyword, and jump destination URL. For example, the search log analyzer 555 carries out a keyword grouping and URL grouping for the search logs stored in the search log storage 551. The keyword grouping includes (a) a grouping of plural search keywords inputted on the AND condition in one search, (b) a grouping of plural search keywords inputted on the AND condition in plural searches, which were sequentially carried out, and (c) a grouping of plural search keywords in plural search logs, which includes the same jump destination URL. The URL grouping includes (a) a grouping of the jump destination URLs included in the search logs of the respective searches, which are sequentially carried out on the AND condition, and (b) a grouping of the jump destination URLs included in the search logs, which include the same keyword.

The keyword sets and jump destination URL sets, which are generated by these groupings, are temporarily stored in a storage device. Then, initially, the keyword sets and the jump destination URL sets are presented for a dictionary manager by displaying them on the display device, or outputting them to a printer. Then, the dictionary manager determines the industry type and company name for each of the keyword sets and jump destination URL sets, and registers each of the keyword sets and jump destination URL sets in the industry type glossary and company name dictionary or the company name dictionary in accordance with the industry type and company name as the determination result. Besides, the industry type and the company name as the determination result are recorded in a file or a table so as to correspond to each of the keyword sets and jump destination URL sets.

For example, if search keywords such as "(name of company A) & computer" are inputted in one search, or if a search using a search keyword "computer" is sequentially carried out on the AND condition after a search using a search keyword "(name of company A)" "was carried out, the word "computer" is registered so as to correspond to the company A or the industry type of the company A. Besides, if the search keywords such as "ABC" and "DEF" are grouped because, in the search logs, which include such search keywords, the jump destination URL is the URL of the same company, the search keywords such as "ABC" and "DEF" are registered so as to correspond to the pertinent company or the industry type of the pertinent company.

Besides, if a search using a search keyword "computer" is sequentially carried out on the AND condition after a search using "(name of company A)" was carried out, and any of URLs extracted as the jump destination URL set is a URL other than the URL of the company A, and its domain is different, the extracted URL is registered as the related URLs so as to correspond to the company A or the industry type of the company A. Besides, if any of the jump destination URL set of the search logs, which include the same search keyword " (company A) ", is a URL other than the URL of the company A, and its domain is different, the jump destination URLs are registered as the related URL so as to correspond to the company A or the industry type of the company A.

When the dictionary manager manually determines the industry type and company name to some degrees, and the industry type and company name as the determination result are registered so as to correspond to each of the keyword sets and jump destination URL sets, it becomes possible for the search log analyzer 555, for example, to determine the industry type and company name for a new keyword set or jump destination URL set. Namely, it extracts a keyword set or jump destination URL set, which is similar to the new keyword set or jump destination URL set, from the records, and assigns the industry type and company name recorded so as to correspond to the extracted keyword set or jump destination URL set to the new keyword set or jump destination URL set. Then, it registers unregistered keyword or jump destination URL among the new keyword set or jump destination URL set in the industry type glossary and company name dictionary or the company name dictionary in accordance with the industry type and company name as the assignment result.

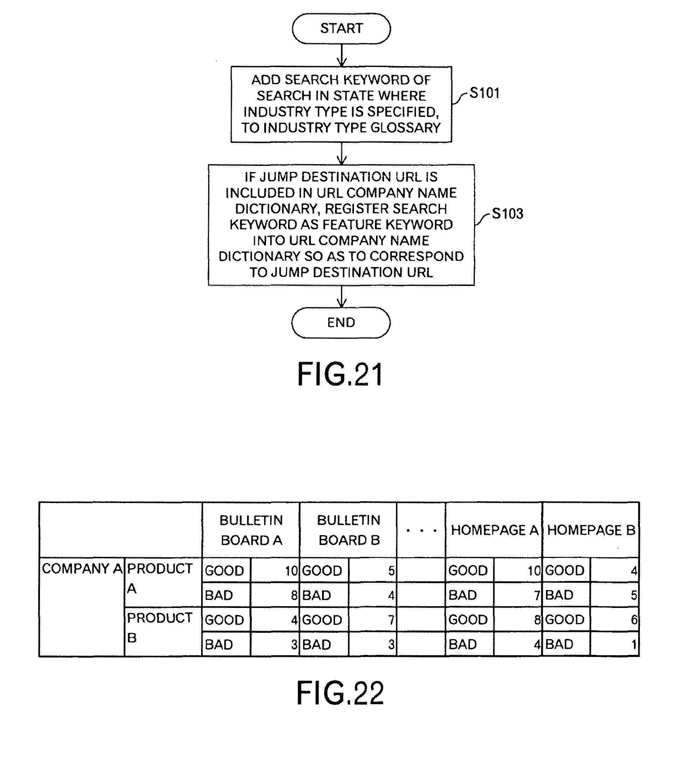

Furthermore, a processing as shown in FIG. 21 is also carried out. Namely, the search log analyzer 555 uses the search logs stored in the search log storage 511 to extract a search log in a state where the industry type is specified, and registers the search keyword in the search log in the industry type glossary (step S101) . For example, this is applicable for a case where a word representing an industry type name is included in the search keywords, a case where the designation of the industry type as a search condition is possible separately from the search keywords, or the like. Incidentally, the search keyword in the extracted search log may be registered in the informal edition of the industry type glossary. Besides, if a jump destination URL of the user in the search log is registered in the URL company name dictionary, the search log analyzer 555 registers the search keyword as the feature keyword so as correspond to the URL into the URL company name dictionary (step S103). For example, if a URL registered in the URL company name dictionary as the jump destination URL is included in the search log, which includes the search keyword "GHI", "GHI" is registered as the feature keyword of the company of the jump destination URL into the URL company name dictionary.

By doing so, the industry type glossary can be expanded using the search log. Besides, the feature keywords in the URL company name dictionary can also be expanded.

Although the embodiment of the present invention has been described above, the present invention is not limited to this. That is, the functional block division in the information collection and analysis system 5 shown in FIG. 1 is one example, and another division may be adopted. Besides, in the processing flow of FIG. 2, with respect to the execution order of the source search processing (step S11), it may be executed at the same time as the statement and thread extraction (step S7) or after that. Also in FIG. 9, the order of the step S51 and step S53, and the order of the step S55 and step S57 can be changed. Also in FIG. 10, the order of the step S61, step S63, and steps S65 to S87 can be changed. The functional block division in FIG. 14 is also one example, and another division may be adopted. In the processing steps in FIG. 15, the execution order can be changed.

Although the description has been given for the information collection and analysis as to a company in the above explanation, a book review or the like may be made an object. Besides, although FIGs. 12 and 13 show the examples of the output of the user interface unit 509, not only company name but also product name may be extracted from the bulletin board and/or the personal homepage, and be stored in, for example, the column 308 to store the extracted information (FIG. 4C), and the user interface unit 509 may output, for example, the information as shown in FIG. 22 to the user terminal 3. That is, with respect to each product of each company, counting as to how far (how many times) a good evaluation (GOOD) is made, or how far (how many times) a bad evaluation (BAD) is made in bulletin boards and/or personal homepages, may be performed with respect to the data stored in the analyzed data storage 510, and the results may be presented to the user.

Besides, in the processing flow in FIG. 20, by further appropriately defining reference values for the number of accesses and the number of kinds of used keywords, sites can be further finely classified. For example, in a case where there are few pages whose number of kinds of used keywords is large in lower layers of a certain site, the site may be judged to be a news providing site.

Embodiments of the present invention extend to the following numbered statements:
Statement 1. A contents information analyzing method, comprising:
   an extraction step of extracting a disclosure unit of an individual opinion from collected contents information;
   an object specification step of specifying an object of said individual opinion; and
   an evaluation specification step of specifying an evaluation as to said object by analyzing disclosed contents of said individual opinion.
Statement 2. The contents information analyzing method as set forth in statement 1, wherein said extraction step comprises:
   a specification step of specifying a unit of said collected contents information including said individual opinion; and
   a step of extracting said disclosure unit of said individual opinion from the specified unit of said collected contents information.
Statement 3. The contents information analyzing method as set forth in statement 2, **characterized in that** said specification step is carried out in descending order of a referenced degree for each said unit of said collected contents information.
Statement 4. The contents information analyzing method as set forth in statement 1, wherein said extraction step comprises a step of detecting a group of said disclosure units of said individual opinions by tracing a reference source of said individual opinion.
Statement 5. The contents information analyzing method as set forth in statement 1, **characterized in that** said extraction step comprises a category specification step of specifying a category as to said object of said individual opinion.
Statement 6. The contents information analyzing method as set forth in statement 5, **characterized in that** in said evaluation specification step, by analyzing disclosed contents of said individual opinion based on said category as to said object of said individual opinion, an evaluation as to said object is specified.
Statement 7. The contents information analyzing method as set forth in statement 1, further comprising a step of judging whether information that can be a basis of said individual opinion is included in said disclosure unit of said individual opinion, and specifying said information that can be the basis if included.
Statement 8. The contents information analyzing method as set forth in statement 1, further comprising a step of specifying a genre of said disclosed contents of said individual opinion.
Statement 9. The contents information analyzing method as set forth in statement 1, further comprising a reliability determining step of determining reliability of said disclosure unit of said individual opinion.
Statement 10. The contents information analyzing method as set forth in statement 9, wherein said reliability determining step comprises a step of judging whether information indicating an identity of the individual is included in said disclosure unit of said individual opinion.
Statement 11. The contents information analyzing method as set forth in statement 9, wherein said reliability determining step comprises a step of judging whether information that can be a basis of said individual opinion is included in said disclosure unit of said individual opinion.
Statement 12. The contents information analyzing method as set forth in statement 1, **characterized in that** in said object specification step, an object of said individual opinion is specified by using a dictionary on a Uniform Resource Locator (URL), a company name, an abbreviation, and an industry type.
Statement 13. The contents information analyzing method as set forth in statement 12, further comprising a step of registering information concerning an industry type corresponding to a company name into said dictionary by using URLs of said collected contents information and similar URLs registered in said dictionary.
Statement 14. The contents information analyzing method as set forth in statement 12, further comprising a step of registering an abbreviation into said dictionary by using anchored character information on said collected contents information and a link destination URL of said collected contents information.
Statement 15. The contents information analyzing method as set forth in statement 12, further comprising a step of registering information concerning an industry type corresponding to a company name into said dictionary by using information of a link topology obtained by analyzing a link relation among said collected contents information.
Statement 16. The contents information analyzing method as set forth in statement 12, further comprising a step of extracting a feature word from said collected contents information, specifying an industry type based on the extracted feature word by using a second dictionary including feature words as to respective industry types, and registering information concerning said industry type corresponding to a company name into said dictionary.
Statement 17. The contents information analyzing method as set forth in statement 5, **characterized in that** in said category specification step, an industry type of a company, which is an object of said individual opinion, is specified by using a second dictionary as to feature words corresponding to respective industry types.
Statement 18. The contents information analyzing method as set forth in statement 16, further comprising a step of extracting a feature word from collected contents information in which an industry type is specified, and adding the extracted feature word to said second dictionary so as to correspond to said industry type.
Statement 19. The contents information analyzing method as set forth in statement 16, further comprising a step of identifying, in search logs for said collected contents information, a keyword of a search in a state where an industry type is already specified, and registering the identified keyword as a feature word into said second dictionary.
Statement 20. The contents information analyzing method as set forth in statement 12, further comprising the steps of:
   judging whether a jump destination URL of a searcher, which is included in a search log for said collected contents information, is included in said dictionary; and
   adding a search keyword included in said search log to said dictionary if it is judged to be included in said dictionary.
Statement 21. The contents information analyzing method as set forth in statement 1, further comprising the steps of:
   analyzing a plurality of search logs for contents information, each said search log including a search keyword and a jump destination, and specifying a site including a personal homepage in a lower layer of said site based on a number of accesses and a number of kinds of search keywords; and
   extracting said personal homepage included in the lower layer of the specified site as said disclosure unit of said individual opinion.
Statement 22. The contents information analyzing method as set forth in statement 1, further comprising a step of analyzing a plurality of search logs for contents information, each said search log including a search keyword and a jump destination URL, and extracting a site of an individual or a small-scale organization based on a number of accesses and a number of kinds of search keywords as said disclosure unit of said individual opinion.
Statement 23. The contents information analyzing method as set forth in statement 12, further comprising the steps of:
   analyzing a plurality of search logs for contents information, each said search log including a search keyword and a jump destination, and specifying a site including a personal homepage in a lower layer of said site based on a number of accesses and a number of kinds of search keywords; and
   registering information concerning the specified site into said dictionary.
Statement 24. The contents information analyzing method as set forth in statement 12, further comprising the steps of:
   analyzing a plurality of search logs for contents information, each said search log including a search keyword and a jump destination, and specifying a company site based on a number of accesses and a number of kinds of search keywords; and
   registering information concerning the specified company site into said dictionary.
Statement 25. A contents information analyzing method, comprising the steps of:
   extracting a disclosure unit of an individual opinion from collected contents information;
   specifying an object of said individual opinion; and
   determining reliability of said disclosure unit of said individual opinion.
Statement 26. A contents information analyzing system, comprising:
   extraction means for extracting a disclosure unit of an individual opinion from collected contents information;
   object specification means for specifying an object of said individual opinion; and
   evaluation specification means for specifying an evaluation as to said object by analyzing disclosed contents of said individual opinion.
Statement 27. The contents information analyzing system as set forth in statement 26, wherein said extraction means comprises:
   specification means for specifying a unit of said collected contents information including said individual opinion; and
   means for extracting said disclosure unit of said individual opinion from the specified unit of said collected contents information.
Statement 28. The contents information analyzing system as set forth in statement 27, **characterized in that** said specification means carries out in descending order of a referenced degree for each said unit of said collected contents information.
Statement 29. The contents information analyzing system as set forth in statement 26, **characterized in that** said extraction means detects a group of said disclosure units of said individual opinions by tracing a reference source of said individual opinion.
Statement 30. The contents information analyzing system as set forth in statement 26, **characterized in that** said extraction means comprises category specifying means for specifying a category as to said object of said individual opinion.
Statement 31. The contents information analyzing system as set forth in statement 30, **characterized in that** said evaluation specification means specifies an individual evaluation as to said object by analyzing disclosed contents of said individual opinion based on said category as to said object of said individual opinion.
Statement 32. The contents information analyzing system as set forth in statement 26, further comprising means for judging whether information that can be a basis of said individual opinion is included in said disclosure unit of said individual opinion, and specifying said information that can be the basis if included.
Statement 33. The contents information analyzing system as set forth in statement 26, further comprising means for specifying a genre of said disclosed contents of said individual opinion.
Statement 34. The contents information analyzing system as set forth in statement 26, further comprising reliability determining means for determining reliability of said disclosure unit of said individual opinion.
Statement 35. The contents information analyzing system as set forth in statement 34, **characterized in that** said reliability determining means judges whether information indicating an identity of the individual is included in said disclosure unit of said individual opinion.
Statement 36. The contents information analyzing system as set forth in statement 34, **characterized in that** said reliability determining means judges whether information that can be a basis of said individual opinion is included in said disclosure unit of said individual opinion.
Statement 37. The contents information analyzing system as set forth in statement 26, **characterize in that** said object specification means specifies an object of said individual opinion by using a dictionary on a Uniform Resource Locator (URL), a company name, an abbreviation, and an industry type.
Statement 38. The contents information analyzing system as set forth in statement 37, further comprising means for registering information concerning an industry type corresponding to a company name into said dictionary by using URLs of said collected contents information and similar URLs registered in said dictionary.
Statement 39. The contents information analyzing system as set forth in statement 37, further comprising means for registering an abbreviation into said dictionary by using anchored character information on said collected contents information and a link destination URL of said collected contents information.
Statement 40. The contents information analyzing system as set forth in statement 37, further comprising means for registering information concerning an industry type corresponding to a company name into said dictionary by using information of a link topology obtained by analyzing a link relation among said collected contents information.
Statement 41. The contents information analyzing system as set forth in statement 37, further comprising means for extracting a feature word from said collected contents information, specifying an industry type based on the extracted feature word by using a second dictionary including feature words as to respective industry types, and registering information concerning an industry type corresponding to a company name into said dictionary.
Statement 42. The contents information analyzing system as set forth in statement 30, **characterized in that** said category specifying means specifies an industry type of a company, which is an object of said individual opinion, by using a second dictionary as to feature words corresponding to respective industry types.
Statement 43. The contents information analyzing system as set forth in statement 41, further comprising means for extracting a feature word from collected contents information for which an industry type is specified, and adding the extracted feature word to said second dictionary so as to correspond to said industry type.
Statement 44. The contents information analyzing system as set forth in statement 41, further comprising means for identifying, in search logs for contents information, a keyword of a search in a state where an industry type is already specified, and registering the identified keyword as a feature word into said second dictionary.
Statement 45. The contents information analyzing system as set forth in statement 37, further comprising:
   means for judging whether a jump destination URL of a searcher, which is included in a search log for contents information, is included in said dictionary; and
   means for adding a search keyword included in said search log to said dictionary if it is judged to be included in said dictionary.
Statement 46. The contents information analyzing system as set forth in statement 26, further comprising:
   means for analyzing a plurality of search logs for contents information, each said search log including a search keyword and a jump destination, and specifying a site including a personal homepage in a lower layer of said site based on a number of accesses and a number of kinds of search keywords; and
   means for extracting said personal homepage included in the lower layer of the specified site as said disclosure unit of said individual opinion.
Statement 47. The contents information analyzing system as set forth in statement 26, further comprising means for analyzing a plurality of search logs for contents information, each said search log including a search keyword and a jump destination URL, and extracting a site of an individual or a small-scale organization based on a number of accesses and a number of kinds of search keywords as said disclosure unit of said individual opinion.
Statement 48. The contents information analyzing system as set forth in statement 37, further comprising:
   means for analyzing a plurality of search logs for contents information, each said search log including a search keyword and a jump destination, and specifying a site including a personal homepage in a lower layer of said site based on a number of accesses and a number of kinds of search keywords; and
   means for registering information concerning the specified site into said dictionary.
Statement 49. The contents information analyzing system as set forth in statement 37, further comprising:
   means for analyzing a plurality of search logs for contents information, each said search log including a search keyword and a jump destination, and specifying a company site based on a number of accesses and a number of kinds of search keywords; and
   means for registering information concerning the specified company site into said dictionary.
Statement 50. A contents information analyzing system, comprising:
   means for extracting a disclosure unit of an individual opinion from collected contents information;
   means for specifying an object of said individual opinion; and
   means for determining reliability of said disclosure unit of said individual opinion.
Statement 51. A storage medium storing a program for causing a computer to perform a contents information analysis processing, said program causing said computer to execute:
   an extraction step of extracting a disclosure unit of an individual opinion from collected contents information;
   an object specification step of specifying an object of said individual opinion; and
   an evaluation step of specifying an evaluation as to said object by analyzing disclosed contents of said individual opinion.
Statement 52. A storage medium storing a program for causing a computer to perform a contents information analysis processing, said program causing said computer to execute the steps of:
   extracting a disclosure unit of an individual opinion from collected contents information;
   specifying an object of said individual opinion; and
   determining reliability of said disclosure unit of said individual opinion.
Statement 53. A contents information analyzing program, causing a computer to execute the steps of:
   extracting a disclosure unit of an individual opinion from collected contents information;
   specifying an object of said individual opinion; and
   specifying an evaluation as to said object by analyzing disclosed contents of said individual opinion.
Statement 54. A contents information analyzing program, causing a computer to execute the steps of:
   extracting a disclosure unit of an individual opinion from collected contents information;
   specifying an object of said individual opinion; and
   determining reliability of said disclosure unit of said individual opinion.

## Claims

1. A contents information analyzing method, comprising:
an obtaining step of obtaining a plurality of search logs for contents information, each said search log including a search keyword and a jump destination URL;
a count step of counting a number of accesses and a number of kinds of search keywords for each said jump destination URL in accordance with a predetermined rule;
a step of totaling, for each site specified based on a structure of the URL, said number of accesses and said number of kinds of search keywords up for said jump destination URLs included in lower layers of said site; and
a step of identifying a type of said site based on the number of accesses and the number of kinds of search keywords, which are totaled up for said site.

2. The contents information analyzing method as set forth in claim 1, wherein said obtaining step comprises a step of generating a plurality of log records, each said log records including a search keyword and a jump destination, from log data stored in a proxy server.

3. The contents information analyzing method as set forth in claim 1 or 2, wherein said count step comprises the steps of:
normalizing the search keyword; and
deleting a search log other than a last search log if a plurality of search logs relating to a same keyword are included within a predetermined time.

4. A contents information analyzing system, comprising:
obtaining means for obtaining a plurality of search logs for contents information, each said search log including a search keyword and a jump destination URL;
count means for counting a number of accesses and a number of kinds of search keywords for each said jump destination URL in accordance with a predetermined rule;
means for totaling, for each site specified based on a structure of the URL, said number of accesses and said number of kinds of search keywords up for the jump destination URLs included in lower layers of said site; and
means for identifying a type of said site based on the number of accesses and the number of kinds of search keywords, which are totaled for said site.

5. The contents information analyzing system as set forth in claim 4, wherein said obtaining means comprises means for generating a plurality of log records, each said log records including a search keyword and a jump destination, from log data stored in a proxy server.

6. The contents information analyzing system as set forth in claim 4 or 5, wherein said count means comprises:
means for normalizing said search keyword; and
means for deleting a search log other than a last search log if a plurality of search logs relating to a same keyword are included within a predetermined time.

7. A storage medium storing a program for causing a computer to perform a contents information analysis processing, said program causing said computer to execute:
an obtaining step of obtaining a plurality of search logs for contents information, each said search log including a search keyword and a jump destination URL;
a count step of counting a number of accesses and a number of kinds of search keywords for each said jump destination URL in accordance with a predetermined rule;
a step of totaling, for each site specified based on a structure of the URL, said number of accesses and said number of kinds of search keywords up for the jump destination URLs included in lower layers of said site; and
a step of identifying a type of said site based on the number of accesses and the number of kinds of search keywords, which are totaled for said site.

8. A contents information analyzing program, causing a computer to execute:
an obtaining step of obtaining a plurality of search logs for contents information, each said search log including a search keyword and a jump destination URL;
a count step of counting a number of accesses and a number of kinds of search keywords for each said jump destination URL in accordance with a predetermined rule;
a step of totaling, for each site specified based on a structure of the URL, said number of accesses and said number of kinds of search keywords up for the jump destination URLs included in lower layers of said site; and
a step of identifying a type of said site based on the number of accesses and the number of kinds of search keywords, which are totaled for said site.
